(19) **Europäisches Patentamt / European Patent Office / Office européen des brevets**

(11) **EP 4 324 950 A1**

(12) # EUROPÄISCHE PATENTANMELDUNG

(43) Veröffentlichungstag:
**21.02.2024 Patentblatt 2024/08**

(21) Anmeldenummer: **22190910.4**

(22) Anmeldetag: **18.08.2022**

(51) Internationale Patentklassifikation (IPC):
*C22C 38/00* (2006.01)   *C22C 38/02* (2006.01)
*C22C 38/04* (2006.01)   *C22C 38/06* (2006.01)
*C22C 38/12* (2006.01)   *C22C 38/24* (2006.01)
*C22C 38/32* (2006.01)   *C21D 1/18* (2006.01)
*C21D 8/02* (2006.01)   *C21D 9/46* (2006.01)
*C23C 2/12* (2006.01)

(52) Gemeinsame Patentklassifikation (CPC):
**C22C 38/001; C21D 1/18; C21D 8/0226;
C21D 8/0236; C21D 9/46; C22C 38/005;
C22C 38/02; C22C 38/04; C22C 38/06;
C22C 38/12; C22C 38/24; C22C 38/32; C23C 2/02;
C23C 2/12; C23C 2/26;** (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**KH MA MD TN**

(71) Anmelder: **ThyssenKrupp Steel Europe AG
47166 Duisburg (DE)**

(72) Erfinder:
• **Dr. Schwabe, Jonas
47249 Duisburg (DE)**

• **Dr. Castro Müller, Cássia
46117 Oberhausen (DE)**
• **Gerber, Thomas
44225 Dortmund (DE)**
• **Dr. Rosenstock, Dirk
45355 Essen (DE)**
• **Dr. Stille, Sebastian
44263 Dortmund (DE)**
• **Dr. Schaffner, Tobias
47495 Rheinberg (DE)**

(74) Vertreter: **ThyssenKrupp Steel Europe AG
Patente/Patent Department
Kaiser-Wilhelm-Straße 100
47166 Duisburg (DE)**

(54) **STAHL MIT VERBESSERTEN VERARBEITUNGSEIGENSCHAFTEN ZUR UMFORMUNG BEI ERHÖHTEN TEMPERATUREN**

(57)   Die Erfindung betrifft ein Stahlflachprodukt für die Warmumformung und ein daraus hergestelltes Blechformteil. Das Stahlsubstrat des Stahlflachproduktes und des Blechformteils weist erhöhte Gehalte an Aluminium und Vanadium auf. Bei einer bevorzugten Variante weist das Stahlsubstrat Cer und Lanthan auf.

EP 4 324 950 A1

(52) Gemeinsame Patentklassifikation (CPC): (Forts.)
**C23C 2/28; C23C 2/29; C23C 2/40; C23C 28/02;
C23C 28/021; C23C 28/023;** C21D 2211/002;
C21D 2211/008

**Beschreibung**

Die Erfindung betrifft ein Stahlflachprodukt für die Warmumformung sowie ein Verfahren zur Herstellung eines solchen Stahlflachproduktes. Weiterhin betrifft die Erfindung ein Blechformteil mit verbesserten Eigenschaften und ein Verfahren zur Herstellung eines solchen Blechformteils aus einem Stahlflachprodukt.

Wenn nachfolgend von einem "Stahlflachprodukt" oder auch von einem "Blechprodukt" die Rede ist, so sind damit Walzprodukte wie Stahlbänder oder -bleche gemeint, aus denen für die Herstellung von beispielsweise Karosseriebauteilen "Blechzuschnitte" (auch Platinen genannt) abgeteilt werden. "Blechformteile" oder "Blechbauteile" der erfindungsgemäßen Art sind aus derartigen Blechzuschnitten hergestellt, wobei hier die Begriffe "Blechformteil" und "Blechbauteil" synonym verwendet werden.

Alle Angaben zu Gehalten der in der vorliegenden Anmeldung angegebenen Stahlzusammensetzungen sind auf das Gewicht bezogen, sofern nicht ausdrücklich anders erwähnt. Alle nicht näher bestimmten, im Zusammenhang mit einer Stahllegierung stehenden "%-Angaben" sind daher als Angaben in "Gew.-%" zu verstehen. Mit Ausnahme der auf das Volumen (Angabe in "Vol.-%") bezogenen Angaben zum Restaustenit-Gehalt des Gefüges eines erfindungsgemäßen Blechformteils beziehen sich Angaben zu den Gehalten der verschiedenen Gefügebestandteile jeweils auf die Fläche eines Schliffs einer Probe des jeweiligen Erzeugnisses (Angabe in Flächenprozent "Flächen-%"), soweit nicht ausdrücklich anders angegeben. In diesem Text gemachte Angaben zu den Gehalten der Bestandteile einer Atmosphäre beziehen sich auf das Volumen (Angabe in "Vol.-%").

Mechanische Eigenschaften, wie Zugfestigkeit, Streckgrenze, Dehnung, die hier berichtet werden, sind im Zugversuch gemäß DIN-EN ISO 6982-1, Probenform 2 (Anhang B Tab. B1) (Stand 2020-06) ermittelt worden, soweit nicht ausdrücklich anders angegeben. Der Biegewinkel wird gemäß der VDA-Norm 238-100 für das Kraftmaximum ermittelt. Zudem wird der Biegewinkel bei einer Dicke des Blechformteils von 1,5mm ermittelt.

Das Gefüge wurde an Längsschliffen bestimmt, die einer Ätzung mit 3% Nital (alkoholische Salpetersäure) unterzogen worden sind. Der Anteil an Restaustenit wurde röntgendiffraktometrisch bestimmt.

Aus der WO 2019/223854 A1 sind ein Blechformteil und ein Verfahren zum Herstellen eines solchen Blechformteils bekannt, das eine Zugfestigkeit von mindestens 1000 MPa besitzt. Das Blechformteil besteht dabei aus einem Stahl, der neben Eisen und unvermeidbaren Verunreinigungen aus (in Gew.-%) 0,10 - 0,30 % C, 0,5 - 2,0 % Si, 0,5 - 2,4 % Mn, 0,01 - 0,2% Al, 0,005 - 1,5 % Cr, 0,01 - 0,1% P und gegebenenfalls weiteren optionalen Elementen, insbesondere 0,005 - 0,1% Nb, zusammengesetzt ist. Zudem umfasst das Blechbauteil einen Korrosionsschutzüberzug, der Aluminium enthält.

Aus der EP 3 483 299 Al sind ein Blechformteil und ein Verfahren zum Herstellen eines solchen Blechformteils bekannt. Das Blechformteil besteht dabei aus einem Stahl, der neben Eisen und unvermeidbaren Verunreinigungen aus (in Gew.-%) 0,27-0,40 C, 0,2-3,0% Mn, 0,11-0,4% V, 0-0,8% Si, 0-0,5% Al, 0-2% Cr, 0-0,15% Ti, 0-0,15% Nb, 0-0,004%B, in Summe weniger als 2% Mo, Ni und Cu zusammengesetzt ist.

Aus der WO 2020/239905 A1 sind Stahlzusammensetzungen mit einem erhöhten Aluminium-Gehalt von bis zu 0,130 für die Warmumformung bekannt

Aus der EP 2 553 133 B1 ist ebenfalls ein Blechformteil und ein Verfahren zum Herstellen eines solchen Blechformteils bekannt.

Vor dem Hintergrund des Standes der Technik bestand die Aufgabe ein Stahlflachprodukt für die Warmumformung so weiterzuentwickeln, dass, insbesondere in Verbindung mit einem Korrosionsschutzüberzug auf Aluminium-Basis, verbesserte Verarbeitungseigenschaften des warmumgeformten Blechformteils erreicht werden. Darüber hinaus sollte ein Verfahren angegeben werden, mit dem sich derartige Blechformteile praxisgerecht herstellen lassen.

Die Erfindung löst diese Aufgabe bei einer ersten Ausführungsform durch ein Stahlflachprodukt für die Warmumformung umfassend ein Stahlsubstrat aus Stahl, der neben Eisen und unvermeidbaren Verunreinigungen (in Gew.-%) aus

| | |
|---|---|
| C: | 0,06 - 0,5 %, |
| Si: | 0,05 - 0,6 %, |
| Mn: | 0,4-3,0%, |
| Al: | 0,06 - 1,0 %, |
| B: | 0,0005 - 0,01 % |
| V: | 0,010 - 0,50 %, |
| P: | $\leq$ 0,03 %, |
| S: | $\leq$ 0,02 %, |
| N: | $\leq$ 0,02 %, |
| Sn: | $\leq$ 0,03 %, |

(fortgesetzt)

| As: | ≤ 0,01 % |
|---|---|

sowie optional einem oder mehreren der Elemente "Ce, La, Ti, Nb, Cr, Cu, Mo, Ni, Ca, W" in folgenden Gehalten

| Ce+La: | 0,01 - 0,03 %, |
|---|---|
| Ti: | 0,0005 - 0,10 %, |
| Nb: | 0,001 - 0,2 %, |
| Cr: | 0,01 - 1,0%, |
| Cu: | 0,01 - 0,2 %, |
| Mo: | 0,002 - 0,3 %, |
| Ni: | 0,01 - 0,5 %, |
| Ca: | 0,0005 - 0,005 %, |
| W: | 0,001 - 1,00 % |

besteht.

Das Stahlsubstrat des erfindungsgemäßen Stahlflachproduktes weist einen Aluminium-Gehalt auf, der mindestens 0,06 Gew.-%, bevorzugt mindestens 0,07 Gew.-%, insbesondere mindestens 0,08 Gew.-% beträgt. Bevorzugt beträgt der Aluminium-Gehalt mindestens 0,10 Gew.-%, besonders bevorzugt mindestens 0,11 Gew.-%, insbesondere mindestens 0,12 Gew.-%, bevorzugt mindestens 0,140 Gew.-%, insbesondere mindestens 0,15 Gew.-%, bevorzugt mindestens 0,16 Gew.-% beträgt. Der maximale Aluminium-Gehalt beträgt 1,0 Gew.-%, insbesondere maximal 0,8 Gew.-%, bevorzugt maximal 0,50 Gew.-%, insbesondere maximal 0,35 Gew.-%, bevorzugt maximal 0,25 Gew.-%, insbesondere maximal 0,24 Gew.-%.

Aluminium ("Al") wird bei der Erzeugung von Stahl bekanntermaßen als Desoxidationsmittel hinzugegeben. Zur sicheren Abbindung des in der Stahlschmelze enthaltenen Sauerstoffs werden mindestens 0,01 Gew.-% Al benötigt. Al kann darüber hinaus zusätzlich zur Abbindung von unerwünschten, jedoch herstellungsbedingt unvermeidbaren Gehalten an N verwendet werden. Vergleichsweise hohe Aluminium-Gehalte wurden bislang vermieden, da sich mit dem Aluminium-Gehalt auch die Ac3-Temperatur nach oben verschiebt. Dies wirkt sich negativ auf die für die Warmumformung wichtige Austenitisierung aus. Es hat sich jedoch gezeigt, dass erhöhte Aluminium-Gehalte überraschenderweise zu positiven Effekten führen, insbesondere in Verbindung mit einem Korrosionsschutzüberzug auf Aluminium-Basis.

Beim Beschichten des Stahlflachproduktes mit einem Korrosionsschutzüberzug auf Aluminium-Basis und beim nachfolgenden Warmumformen von hiervon abgeteilten Blechzuschnitten zu Blechformteilen kommt es zu einer Diffusion von Eisen aus dem Stahlsubstrat in den flüssigen Korrosionsschutzüberzug. In der Interdiffusionszone werden dabei Eisen-Aluminidverbindungen mit höherer Dichte über eine mehrstufige Phasentransformation (Fe2Al5→Fe2Al→FeAl→Fe3Al) gebildet. Die Ausbildung von solchen dichteren Phasen ist mit einem höheren Aluminiumverbrauch als bei weniger dichten Phasen verbunden. Dieser lokal höhere Aluminiumverbrauch führt zur Entstehung von Poren (Leerstellen) in der erhaltenen Phase. Bevorzugt bilden sich diese Poren im Übergangsbereich zwischen Stahlsubstrat und Korrosionsschutzüberzug, wo der Anteil des zur Verfügung stehenden Aluminiums stark durch den Aluminium-Gehalt des Stahlsubstrates geprägt ist. Es kann insbesondere zu einer Ansammlung von Poren in Form eines Bandes im Übergangsbereich kommen.

Solche Poren und insbesondere ein Band von Poren verursachen vielfältige Probleme:

- Durch die Poren ist die mechanische Integrität in diesem Bereich reduziert. Es kann schneller zu Schichtablösung bei korrosiver Beanspruchung kommen. Zudem reduziert sich die übertragbare Kraft an der Verbindungsstelle zweier Bauteile nach Verkleben oder Verschweißen.
- Die Poren führen zu veränderten Strombahnen im Material beim Widerstandpunktschweißen, die die Schweißeignung negativ beeinflussen und so den Schweißbereich reduzieren.
- Bereits die Poren selbst erleichtern die Risseinleitung und Rissausbreitung beim statischen und dynamischen Biegen.

Überraschenderweise hat sich gezeigt, dass durch die Erhöhung des Aluminium-Gehaltes ("Al") im Stahlsubstrat auf die beschriebenen Untergrenzen und darüber hinaus eine deutliche Reduzierung der Porenbildung bei der Beschichtung mit einem Korrosionsschutzüberzug auf Aluminium-Basis und der nachfolgenden Warmumformung erreicht werden kann. Insbesondere im Übergangsbereich zwischen Stahlsubstrat und Korrosionsschutzüberzug kann der lokal höhere Aluminiumverbrauch bei der Bildung dichterer Eisen-Aluminidverbindungen zumindest teilweise durch den Aluminium-Gehalt des Stahlsubstrates kompensiert werden, so dass die Bildung von Poren, insbesondere eines Bandes aus Poren, unterdrückt wird.

Bei einem zu hohen Al-Gehalt, insbesondere bei Gehalten von mehr als 1,0 Gew-% Al, besteht die Gefahr, dass sich an der Oberfläche eines aus erfindungsgemäß legiertem Stahlwerkstoff gefertigten Produkts Al-Oxide bilden, die das Benetzungsverhalten beim Schmelztauchbeschichten verschlechtern würden. Zudem wird bei höheren Al-Gehalten die Bildung von nichtmetallischen Al-basierten Einschlüssen begünstigt, die als grobe Einschlüsse das Crashverhalten negativ beeinflussen. Daher wird der Al-Gehalt bevorzugt unterhalb der bereits genannten Obergrenzen gewählt.

Unterstützt wird dabei insbesondere das Biegeverhalten durch die Zugabe von Vanadium ("V"). Vanadium ist im Stahl des Stahlflachproduktes in Gehalten von 0,010 - 0,50 Gew.-% enthalten. Ab einem Vanadium-Gehalt von 0,010 Gew.-% werden vermehrt Vanadiumkarbonitride gebildet. Diese wirken als Fallen für den im Stahl vorhandenen Wasserstoff, der ansonsten den Stahl verspröden würde. Bevorzugt beträgt der Vanadium-Gehalt mindestens 0,020 Gew.-%, insbesondere mindestens 0,030 Gew.-%, besonders bevorzugt mindestens 0,050 Gew.-%.

Der angegebene Vanadium-Gehalt führt (ebenso wie der später erläuterte optionale Niob-Gehalt) insbesondere bei dem nachfolgend beschriebenen Verfahren zum Herstellen eines Stahlflachprodukts für die Warmumformung mit einem Korrosionsschutzüberzug zu einer Verteilung von Vanadiumkarbonitriden (bzw. Niobkarbonitriden), die beim anschließenden Warmumformen zu einem besonders feinen Härtungsgefüge führt. Während des Abkühlens nach dem Schmelztauchbeschichten wird das beschichtete Stahlflachprodukt für eine gewisse Zeit in einem Temperaturbereich von 400 °C und 300 °C gehalten. In diesem Temperaturbereich besteht noch eine gewisse Diffusionsgeschwindigkeit von Kohlenstoff ("C") im Stahlsubstrat, während die thermodynamische Löslichkeit sehr gering ist. Somit diffundiert Kohlenstoff zu Gitterstörungen und sammelt sich dort. Gitterstörungen werden insbesondere durch gelöste Vanadium- bzw. Niob-Atome verursacht, die durch ihr deutlich höheres Atomvolumen das Atomgitter aufweiten und somit die Tetraeder- und Oktaederlücken im Atomgitter vergrößern, so dass die lokale Löslichkeit von C erhöht ist. Folglich ergeben sich Cluster von Kohlenstoff und Vanadium bzw. Niob im Stahlsubstrat, welche sich dann im nachfolgenden Austenitisierungsschritt der Warmumfomung zu sehr feinen Ausscheidungen umwandeln und als zusätzliche Austenitkeime wirken. Daher ergibt sich ein verfeinertes Austenitgefüge mit kleineren Austenitkörnern und damit auch ein verfeinertes Härtungsgefüge.

Dies betrifft insbesondere auch die sich in der Warmumformung ausbildende ferritische Interdiffusionsschicht. Das verfeinerte ferritische Gefüge in der Interdiffusionsschicht unterstützt die Reduzierung der Risseinleitungstendenzen unter Biegebelastungen.

Zudem scheiden sich Vanadiumkarbonitride auch während des Warmumformprozesses, zum Beispiel beim Transfer von der Erwärmungseinrichtung zum Umformwerkzeug oder bei der Abkühlung nach Entnahme aus dem Umformwerkzeug aus und bewirken so eine hohe Menge besonders feiner Ausscheidungen. Diese feinen Ausscheidungen wirken besonders vorteilhaft auf Festigkeit und Wasserstoffbeständigkeit.

Bei höheren Vanadiumgehalten bilden sich zunehmend gröbere Ausscheidungen. Solche gröberen Ausscheidungen können ausgeprägtere Verzerrungen in der umliegenden Gefügestruktur hervorrufen, welche wiederum zur Anreicherung von Wasserstoff führen können und so eher kontraproduktiv wirken, wohingegen eine feinverteilte Karbidbildung größere Mengen vorhandenen Wasserstoffs dauerhaft abbindet. Zudem ist eine hohe Zugabe von Vanadium wirtschaftlich nicht sinnvoll. Für gutes Biegeverhalten und insbesondere hohe Beständigkeit gegen Wasserstoffversprödung beträgt der Vanadium-Gehalt bevorzugt maximal 0,50 Gew.-%, insbesondere maximal 0,30 Gew.-%, bevorzugt maximal 0,20 Gew.-%, insbesondere bevorzugt 0,1 Gew.-%, besonders bevorzugt 0,08 Gew.-%.

Die Elemente Vanadium, Niob und Titan bilden alle Ausscheidungen, die zur Kornfeinung beitragen. Aufgrund der unterschiedlichen Löslichkeiten treten die Ausscheidungen allerdings bei unterschiedlichen Temperaturen auf. Ti-Nitride haben die niedrigste Löslichkeit in Austenit und scheiden daher bereits bei sehr hohen Temperaturen aus und setzen das Kornwachstum von Austenit herab. Nb scheidet ab mittleren Temperaturen aus und Vanadium erst unterhalb von ca. 900°C. Damit führt Vanadium zu besonders feinen Ausscheidungen. Die Gehalte der drei Elemente sind daher genau aufeinander und auf den Abkühlungsprozess abzustimmen.

Optional weist der Stahl des erfindungsgemäßen Stahlflachproduktes einen Gehalt an Cer ("Ce") und Lanthan ("La") auf, der größer ist als 0,01 Gew.-%. Die Angabe Ce+La größer oder kleiner als ein bestimmter Wert bedeutet, dass in dem Stahl entweder Cer oder Lanthan vorhanden sind, oder dass Cer und Lanthan gleichzeitig vorhanden sind, wobei in allen drei Fällen gilt, dass die Summe der Gehalte von Cer und Lanthan größer oder kleiner als der bestimmte Wert sind. Daher ist

Ce+La: 0,01-0,03 Gew.-% so zu verstehen, dass in dem Stahl entweder Cer oder Lanthan vorhanden sind oder dass sowohl Cer und Lanthan vorhanden sind, wobei für die Summe der Gehalte an Cer und Lanthan gilt, dass sie im Bereich von 0,01-0,03 Gew.-% liegt. Bevorzugt beträgt der Gehalt von Ce+La mindestens 0,010 Gew.-%, insbesondere mindestens 0,015 Gew.-%. Weiterhin bevorzugt beträgt der Gehalt von Ce+La maximal 0,025 Gew.-%. Cer und Lanthan sind chemisch sehr ähnlich und haben daher einerseits die gleiche Wirkung im Stahl und sind andererseits analytisch nur sehr schwer zu unterscheiden. Daher ist es zweckdienlich lediglich die Summe der Gehalte von Cer und Lanthan zu betrachten. Im weiteren wird daher auch gelegentlich auf "Cer/Lanthan" Bezug genommen, wenn die Zugabe von Cer und/oder Lanthan gemeint ist.

Überraschenderweise hat sich gezeigt, dass bereits die Zugabe von Ce+La in kleinen Mengen ab 0,01 Gew.-% sich positiv auf den Widerstand gegen Wasserstoffversprödung (und damit auf das Biegeverhalten) auswirkt. Durch die entsprechende Zugabe kommt es zur Bildung von effizienteren Wasserstofffallen. Untersuchungen haben gezeigt, dass dies unter anderem durch die Bildung von sphäroiden Oxisulfiden von Ce und/oder La (z.B. $Ce_2O_2S$) verursacht wird. Die Verbindungen von Ce und La bilden sich bereits bei sehr hohen Temperaturen und sind thermodynamisch sehr stabil. Sie sorgen so zudem über die Abbindung von Sauerstoff und Schwefel für geringere Mengen von $Al_2O_3$, MnS und ähnlichen Einschlüssen.

Bei zu hohen Gehalten an Ce+La kann es zum Zusetzen des Tauchrohrs beim Gießprozess kommen (sog. "Clogging"). Daher ist der Gehalt an Ce+La auf 0,03 Gew.-% begrenzt.

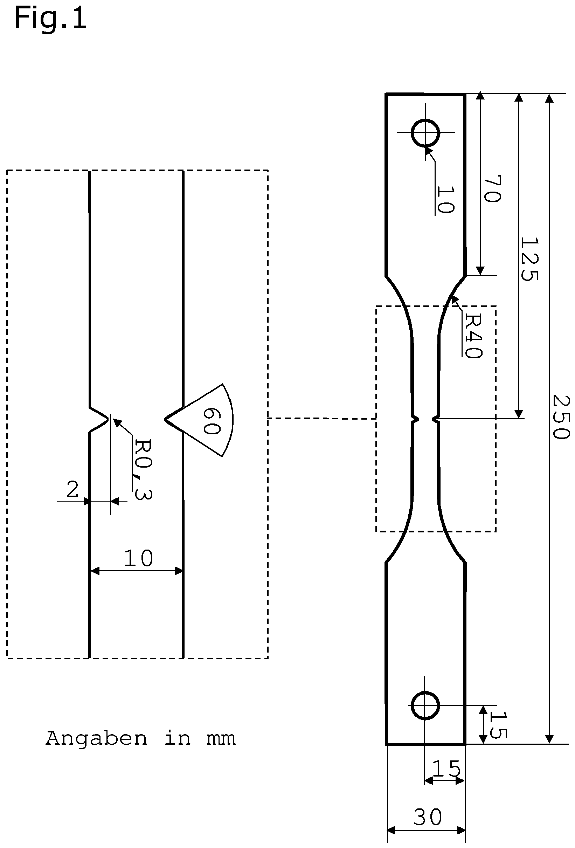

Die Beständigkeit gegen Wasserstoffversprödung wird mittels eines modifizierten Slow Strain Rate Tests in Anlehnung an die die DIN EN ISO 7539-7:2018-05 ermittelt. Die Prüfgeschwindigkeit betrug $0,1\mu m/s$. Die Messung wurde bei Raumtemperatur durchgeführt. Die Probengeometrie ist detailliert in Figur 1 dargestellt, wobei die Abstandsangaben in Figur 1 in mm zu verstehen sind. Bestimmt wurde die maximale Bruchspannung bis zum Probenversagen. Um den Einfluss von eindiffundiertem Wasserstoff zu testen, befand sich der Probenkörper mittig in einer Elektrolytzelle, die mit einem wässrigen Elektrolyten mit 0,025% NH4SCN (Ammoniumthiocyanat) gefüllt war. Die Beladestromdichte betrug -0,025 mA/cm². Hierdurch wurde der Probenkörper vor und während der Messung mit Wasserstoff beladen. Die Wasserstoffbeladung wurde 80 Minuten vor der mechanischen Belastung gestartet und bis zum Probenversagen aufrechterhalten. Dies gewährleistete eine homogene Wasserstoffkonzentration zu Prüfbeginn und verhinderte eine Freisetzung des Wasserstoffs während des Tests. Die in diesem Test ermittelte Bruchspannung dient als Maß für die Beständigkeit gegen Wasserstoffversprödung.

Insgesamt wirken sich also die Zugaben von Aluminium, Vanadium und Cer/Lanthan jeweils positiv auf das Biegeverhalten aus. Besonders bevorzugt werden sowohl Aluminium als auch Vanadium als auch Cer und/oder Lanthan beilegiert. Bereits die Zulegierung von zweien dieser drei Stoffe bewirkt jedoch eine Verbesserung gegenüber dem Stand der Technik. Daher wird die Aufgabe bereits durch die Zugabe von Aluminium und Vanadium gelöst, wie in der oben beschriebenen ersten Ausführungsform erläutert. Ebenso führt die Zulegierung von Vanadium und Cer/Lanthan (auch bereits ohne Aluminium) zu einem verbesserten Biegeverhalten. Daher wird die erfindungsgemäße Aufgabe ebenso durch die nachfolgende zweite Ausführungsform gelöst.

Bei dieser zweiten Ausführungsform wird die erfindungsgemäße Aufgabe gelöst durch ein Stahlflachprodukt für die Warmumformung umfassend ein Stahlsubstrat aus Stahl, der neben Eisen und unvermeidbaren Verunreinigungen (in Gew.-%) aus

| | |
|---|---|
| C: | 0,06 - 0,5 %, |
| Si: | 0,05 - 0,6 %, |
| Mn: | 0,4-3,0%, |
| B: | 0,0005 - 0,01 % |
| V: | 0,010 - 0,50 %, |
| P: | ≤ 0,03 %, |
| S: | ≤ 0,02 %, |
| N: | ≤ 0,02 %, |
| Sn: | ≤ 0,03 %, |
| As: | ≤ 0,01 % |
| Ce+La: | 0,01 - 0,03 %, |

sowie optional einem oder mehreren der Elemente "Al, Ti, Nb, Cr, Cu, Mo, Ni, Ca, W" in folgenden Gehalten

| | |
|---|---|
| Al: | ≤1,0 %, |
| Ti: | 0,0005 - 0,10 %, |
| Nb: | 0,001 - 0,2 %, |
| Cr: | 0,01 - 1,0%, |
| Cu: | 0,01 - 0,2 %, |
| Mo: | 0,002 - 0,3 %, |
| Ni: | 0,01 - 0,5 %, |

(fortgesetzt)

| | |
|---|---|
| Ca: | 0,0005 - 0,005 %, |
| W: | 0,001 - 1,00 % |

besteht.

Für Vanadium und Cer/Lanthan, die bei dieser zweiten Ausführungsform verpflichtend sind, gelten die gleichen bevorzugten Bereiche wie bei der ersten Ausführungsform. Für das hier optionale Aluminium gilt, dass der optionale Aluminium-Gehalt bevorzugt mindestens 0,01 Gew.-%, insbesondere mindestens 0,03 Gew.-%, besonders bevorzugt mindestens 0,06 Gew.-%, bevorzugt mindestens 0,07 Gew.-%, insbesondere mindestens 0,08 Gew.-% beträgt. Bevorzugt beträgt der Aluminium-Gehalt mindestens 0,10 Gew.-%, besonders bevorzugt mindestens 0,11 Gew.-%, insbesondere mindestens 0,12 Gew.-%, bevorzugt mindestens 0,140 Gew.-%, insbesondere mindestens 0,15 Gew.-%, bevorzugt mindestens 0,16 Gew.-% beträgt. Der maximale Aluminium-Gehalt beträgt 1,0 Gew.-%, insbesondere maximal 0,8 Gew.-%, bevorzugt maximal 0,50 Gew.-%, insbesondere maximal 0,35 Gew.-%, bevorzugt maximal 0,25 Gew.-%, insbesondere maximal 0,24 Gew.-%.

Die nachfolgenden Ausführungen für die verschiedenen Elemente und deren bevorzugten Bereiche gelten sowohl für die erste Ausführungsform als auch für die zweiten Ausführungsform.

Kohlenstoff ("C") ist im Stahlsubstrat des Stahlflachproduktes in Gehalten von 0,06 - 0,5 Gew.-% enthalten. Derart eingestellte C-Gehalte tragen zur Härtbarkeit des Stahls bei, indem sie die Ferrit- und Bainitbildung verzögern sowie den Restaustenit im Gefüge stabilisieren. Ein C-Gehalt von mindestens 0,06 Gew.-% ist erforderlich, um eine ausreichende Härtbarkeit und eine damit einhergehende hohe Festigkeit zu erzielen.

Durch hohe C-Gehalte kann allerdings die Schweißbarkeit negativ beeinflusst werden. Um die Schweißbarkeit zu verbessern, kann der C-Gehalt auf 0,5 Gew.-%, bevorzugt auf höchstens 0,5 Gew.-%, insbesondere auf höchstens 0,45 Gew.-%, bevorzugt auf 0,42 Gew.-%, besonders bevorzugt 0,40 Gew.-%, bevorzugt maximal 0,38 Gew.-%, insbesondere maximal 0,35 Gew.-%, bevorzugt maximal 0,33 Gew.-% eingestellt werden. Weiterhin bevorzugt beträgt der C-Gehalt mindestens 0,20 Gew.-%, insbesondere mindestens 0,25 Gew.-%, bevorzugt mindestens 0,30 Gew.-%, insbesondere mindestens 0,31 Gew.-%.

Silizium ("Si") wird zur weiteren Erhöhung der Härtbarkeit des Stahlflachprodukts sowie der Festigkeit des pressgehärteten Produkts über Mischkristallverfestigung verwendet. Silizium ermöglicht außerdem den Einsatz von Ferro-Silizio-Mangan als Legierungsmittel, was sich begünstigend auf die Produktionskosten auswirkt. Ab einem Si-Gehalt von 0,05 Gew.-% stellt sich bereits ein Härtungseffekt ein. Ab einem Si-Gehalt von mindestens 0,10 Gew.-%, insbesondere mindestens 0,15 Gew.-% tritt ein signifikanter Anstieg der Festigkeit auf. Si-Gehalte oberhalb von 0,6 Gew.-% wirken sich nachteilig auf das Beschichtungsverhalten aus, insbesondere bei Al-basierten Beschichtungen. Si-Gehalte von höchstens 0,50 Gew.-%, insbesondere höchstens 0,30 Gew.-%, bevorzugt maximal 0,25 Gew.-% werden bevorzugt eingestellt, um die Oberflächenqualität des beschichteten Stahlflachprodukts zu verbessern.

Mangan ("Mn") wirkt als härtendes Element, indem es die Ferrit- und die Bainitbildung stark verzögert. Bei Mangangehalten kleiner 0,4 Gew.-% werden während des Presshärtens selbst bei sehr schnellen Abkühlgeschwindigkeiten signifikante Anteile von Ferrit und Bainit gebildet, was vermieden werden sollte. Mn-Gehalte von mindestens 0,5 Gew.-%, insbesondere mindestens 0,7 Gew.-%, bevorzugt mindestens 0,8 Gew.-%, insbesondere von mindestens 0,9 Gew.-%, besonders bevorzugt von mindestens 1,0 Gew.-%, insbesondere mindestens 1,05 Gew.-%, sind vorteilhaft, wenn ein martensitisches Gefüge insbesondere in Bereichen größerer Umformung gewährleistet werden soll. Mn-Gehalte von mehr als 3,0 Gew.-% wirken sich nachteilig auf die Verarbeitungseigenschaften aus, weshalb der Mn-Gehalt erfindungsgemäßer Stahlflachprodukte auf höchstens 3,0 Gew.-%, bevorzugt höchstens 2,5 Gew.-% beschränkt ist. Vor allem die Schweißbarkeit ist stark eingeschränkt, weshalb der Mn-Gehalt bevorzugt auf höchstens 1,6 Gew.-% und insbesondere auf 1,30 Gew.-%, bevorzugt auf 1,20 Gew.-% beschränkt ist. Mn-Gehalte kleiner oder gleich 1,6 Gew.-% werden darüber hinaus auch aus ökonomischen Gründen bevorzugt.

Bor ("B") wird hinzulegiert, um die Härtbarkeit des Stahlflachprodukts zu verbessern, indem auf den Austenitkorngrenzen angelagerte Boratome oder Borausscheidungen die Korngrenzenenergie verringern, wodurch die Nukleation von Ferrit während des Presshärtens unterdrückt wird. Ein deutlicher Effekt auf die Härtbarkeit tritt bei B-Gehalten von mindestens 0,0005 Gew.-%, bevorzugt mindestens 0,0007 Gew.-%, insbesondere mindestens 0,0010 Gew.-%, insbesondere mindestens 0,0020 Gew.-% auf. Bei B-Gehalten über 0,01 Gew.-% bilden sich hingegen vermehrt Borkarbide, Bornitride oder Bornitrokarbide, welche wiederum bevorzugte Keimstellen für die Nukleation von Ferrit darstellen und den härtenden Effekt wieder absenken. Aus diesem Grund wird der B-Gehalt auf höchstens 0,01 Gew.-%, bevorzugt höchstens 0,0100 Gew.-%, bevorzugt höchstens 0,0050 Gew.-%, insbesondere höchstens 0,0035 Gew.-%, insbesondere höchstens 0,0030 Gew.-%, bevorzugt höchstens 0,0025 Gew.-% beschränkt.

Phosphor ("P") und Schwefel ("S") sind Elemente, die als Verunreinigungen durch Eisenerz in den Stahl eingeschleppt werden und nicht vollständig im großtechnischen Stahlwerksprozess beseitigt werden können. Der P-Gehalt und der S-Gehalt sollten so gering wie möglich gehalten werden, da sich die mechanischen Eigenschaften wie zum Beispiel die Kerbschlagarbeit mit zunehmendem P--Gehalt bzw. S-Gehalt verschlechtern. Ab P-Gehalten von 0,03 Gew.-% tritt zudem eine beginnende Versprödung des Martensits auf, weshalb der P-Gehalt eines erfindungsgemäßen Stahlflachprodukts auf höchstens 0,03 Gew.-%, insbesondere höchstens 0,02 Gew.-%, begrenzt ist. Der S-Gehalt eines erfindungsgemäßen Stahlflachprodukts ist auf höchstens 0,02 Gew.-%, bevorzugt höchstens 0,0010 Gew.-%, insbesondere höchstens 0,005 Gew.-%, begrenzt.

Stickstoff ("N") ist ebenfalls aufgrund des Stahlfertigungsprozesses in geringen Mengen im Stahl als Verunreinigung vorhanden. Der N-Gehalt ist möglichst gering zu halten und sollte höchstens 0,02 Gew.-% betragen. Insbesondere bei Legierungen, die Bor enthalten, ist Stickstoff schädlich, da es durch die Bildung von Bornitriden den umwandlungsverzögernden Effekt von Bor verhindert, weshalb der N-Gehalt in diesem Fall bevorzugt höchstens 0,010 Gew.-%, insbesondere höchstens 0,007 Gew.-%, betragen sollte.

Weitere typische Verunreinigungen sind Zinn ("Sn") und Arsen ("As"). Der Sn-Gehalt beträgt maximal 0,03 Gew.-%, bevorzugt maximal 0,02 Gew.-%. Der As-Gehalt beträgt maximal 0,01 Gew.-%, insbesondere maximal 0,005 Gew.-%.

Neben den zuvor erläuterten Verunreinigungen P, S, N, Sn und As können auch noch weitere Elemente als Verunreinigungen im Stahl vorhanden sein. Diese weiteren Elemente werden unter den "unvermeidbaren Verunreinigungen" zusammengefasst. Bevorzugt beträgt der Gehalt an diesen "unvermeidbaren Verunreinigungen" in Summe maximal 0,2 Gew.-%, bevorzugt maximal 0,1 Gew.-%. Die nachfolgend beschriebenen optionalen Legierungselemente Ce, La, Ti, Nb, Cr, Cu, Mo, Ni, Ca und W, für die eine Untergrenze angegeben ist, können auch in Gehalten unterhalb der jeweiligen Untergrenze als unvermeidbare Verunreinigungen im Stahlsubstrat vorkommen. In dem Fall werden sie ebenfalls zu den "unvermeidbaren Verunreinigungen" gezählt, deren Gesamtgehalt auf maximal 0,2 Gew.-%, bevorzugt maximal 0,1 Gew.-% begrenzt ist.

Cer, Lanthan, Titan, Niob, Chrom, Kupfer, Molybdän, Nickel, Calzium und Wolfram können bei der ersten Ausführungsform dem Stahl eines erfindungsgemäßen Stahlflachprodukts jeweils einzeln oder in Kombination miteinander optional hinzulegiert werden.

Aluminium, Titan, Niob, Chrom, Kupfer, Molybdän, Nickel, Calzium und Wolfram können bei der zweiten Ausführungsform dem Stahl eines erfindungsgemäßen Stahlflachprodukts jeweils einzeln oder in Kombination miteinander optional hinzulegiert werden.

Titan ("Ti") ist ein Mikrolegierungselement, welches optional hinzulegiert wird, um zur Kornfeinung beizutragen, wobei mindestens 0,0005 Gew.-% Ti, insbesondere mindestens 0,0010 Gew.-%, bevorzugt mindestens 0,010 Gew.-% Ti, für eine ausreichende Verfügbarkeit hinzugegeben werden sollten. Ab 0,10 Gew.-% Ti verschlechtert sich die Kaltwalzbarkeit und Rekristallisierbarkeit deutlich, weshalb größere Ti-Gehalte vermieden werden sollten. Um die Kaltwalzbarkeit zu verbessern, kann der Ti-Gehalt bevorzugt auf 0,08 Gew.-%, insbesondere auf 0,038 Gew.-%, besonders bevorzugt auf 0,020 Gew.-%, insbesondere 0,015 Gew.-% beschränkt sein. Titan hat zudem den Effekt, Stickstoff abzubinden und so Bor es zu ermöglichen, seine stark ferrithemmende Wirkung zu entfalten.

Noch weiter verbessert wird das Biegeverhalten des Blechbauteils durch die optionale Zugabe von Niob ("Nb") in Gehalten von mindestens 0,001 Gew.-%. Bevorzugt beträgt der Nb-Gehalt mindestens 0,005 Gew.-%, insbesondere mindestens 0,010 Gew.-%, bevorzugt mindestens 0,015 Gew.-%, besonders bevorzugt mindestens 0,020 Gew.-%.

Der Wirkmechanismus von Niob ist bereits vorstehend im Zusammenhang mit Vanadium erläutert, da für beide Elemente analoge Mechanismen vorliegen.

Ein zu hoher Nb-Gehalt führt allerdings zu einer verschlechterten Rekristallisierbarkeit. Daher beträgt der Nb-Gehalt maximal 0,2 Gew.-%. Weiterhin bevorzugt beträgt der Nb-Gehalt maximal 0,20 Gew.-%, insbesondere maximal 0,15 Gew.-%, bevorzugt maximal 0,10 Gew.-%, insbesondere maximal 0,05 Gew.-%, bevorzugt maximal 0,04 Gew.-%, insbesondere maximal 0,030 Gew.-%.

Aluminium, Niob und Vanadium haben einen Einfluss auf die Kornfeinung bei der Austenitisierung im Warmumformprozess. Es hat sich herausgestellt, dass Aluminium neben Niob insbesondere das Kornwachstum bei erhöhten Temperaturen im Austenit (beispielsweise bei über 1200 °C) über eine verhältnismäßig frühe, d.h. bei relativ hohen Temperaturen stattfindende, Bildung von AlN verfeinert. Die Bildung von AlN ist gegenüber der Bildung von NbN bzw. NbC und VN bzw. VC thermodynamisch begünstigt. Die Ausscheidung von AlN wirkt hier kornfeinend im Austenit und somit zähigkeitsverbessernd. Steigende Verhältnisse von Al zur Summe der Gehalte von Nb und V verbessern diesen Effekt. Daher gilt optional für das Verhältnis Al/(Nb+V) aus Al-Gehalt zur Summe des Nb- und V-Gehaltes:

$$1 \leq Al/(Nb+V)$$

bevorzugt ist das Verhältnis $Al/Nb \geq 2$. Gleichzeitig führt ein zu großes Verhältnis von Al/(Nb+V) dazu, dass die AlN-Bildung nicht mehr so vorteilhaft fein erfolgt, sondern zunehmend gröbere AlN-Partikel auftreten, was den Kornfeinungseffekt wieder schmälert. Daher ist es vorteilhaft, optional ein Verhältnis von Al/(Nb+V) einzustellen, für das gilt:

$$Al/(Nb+V) \leq 30.0$$

Bevorzugt ist das Verhältnis Al/(Nb+V) ≤ 20.0, insbesondere ≤ 16.0, bevorzugt ≤ 14.0, besonders bevorzugt ≤ 12.0, insbesondere ≤ 10.0, bevorzugt ≤ 8.0, insbesondere ≤ 6.0, bevorzugt ≤ 4.0.

Optional vorhandenes Chrom ("Cr") unterdrückt die Bildung von Ferrit und Perlit während einer beschleunigten Abkühlung eines erfindungsgemäßen Stahlflachprodukts und ermöglicht eine vollständige Martensitbildung auch bei geringeren Abkühlraten, wodurch eine Steigerung der Härtbarkeit erzielt wird.

Diese genannten Effekte stellen sich ab einem Gehalt von 0,01 Gew.-% ein, wobei sich ein Gehalt von mindestens 0,10 Gew.-%, bevorzugt mindestens 0,15 Gew.-% in der Praxis für eine sichere Prozessführung bewährt hat. Zu hohe Gehalte an Cr beeinträchtigen allerdings die Beschichtbarkeit des Stahls. Deshalb ist der Cr-Gehalt des Stahls eines des Stahlsubstrates auf höchstens 1,0 Gew.-%, bevorzugt maximal 0,80 Gew.-%, insbesondere maximal 0,75 Gew.-%, bevorzugt maximal 0,50 Gew.-%, insbesondere maximal 0,30 Gew.-% beschränkt.

Kupfer ("Cu") kann optional hinzulegiert werden, um bei Zugaben von mindestens 0,01 Gew.-%, bevorzugt mindestens 0,010 Gew.-%, insbesondere mindestens 0,015 Gew.-% die Härtbarkeit zu erhöhen. Darüber hinaus verbessert Kupfer den Widerstand gegen atmosphärische Korrosion unbeschichteter Bleche oder Schnittkanten. Bei einem zu hohen Cu-Gehalt verschlechtert sich die Warmwalzbarkeit aufgrund niedrigschmelzender Cu-Phasen an der Oberfläche deutlich, weshalb der Cu-Gehalt auf höchstens 0,2 Gew.-%, bevorzugt höchstens 0,1 Gew.-%, insbesondere maximal 0,10 Gew.-% beschränkt ist.

Molybdän ("Mo") kann zur Verbesserung der Prozessstabilität optional hinzugegeben werden, da es die Ferritbildung deutlich verlangsamt. Ab Gehalten von 0,002 Gew.-% bilden sich dynamisch Molybdän-Kohlenstoff-Cluster bis hin zu ultrafeinen Molybdänkarbiden auf den Korngrenzen, welche die Beweglichkeit der Korngrenze und somit diffusive Phasenumwandlungen deutlich verlangsamen. Außerdem wird durch Molybdän die Korngrenzenenergie verringert, was die Nukleationsrate von Ferrit verringert. Bevorzugt beträgt der Mo-Gehalt mindestens 0,004 Gew.-%, insbesondere mindestens 0,01 Gew.-%. Aufgrund der hohen Kosten, welche mit einer Legierung von Molybdän verbunden sind, sollte der Mo-Gehalt höchstens 0,3 Gew.-%, insbesondere höchstens 0,10 Gew.-%, bevorzugt höchstens 0,08 Gew.-% betragen.

Nickel ("Ni") stabilisiert die austenitische Phase und kann optional hinzulegiert werden, um die Ac3-Temperatur zu verringern und die Bildung von Ferrit und Bainit zu unterdrücken. Nickel hat darüber hinaus einen positiven Einfluss auf die Warmwalzbarkeit, insbesondere, wenn der Stahl Kupfer enthält. Kupfer verschlechtert die Warmwalzbarkeit. Um dem negativen Einfluss von Kupfer auf die Warmwalzbarkeit entgegenzuwirken, können dem Stahl 0,01 Gew.-% Nickel hinzulegiert werden, bevorzugt beträgt der Ni-Gehalt mindestens 0,015 Gew.-%. Aus ökonomischen Gründen sollte der Nickelgehalt auf höchstens 0,5 Gew.-%, insbesondere höchstens 0,20 Gew.-%, beschränkt bleiben. Bevorzugt beträgt der Ni-Gehalt maximal 0,10 Gew.-%.

Calcium ("Ca") dient in Stählen zur Einformung von nichtmetallischen Einschlüssen, insbesondere von Mangansulfiden. Durch die rundliche Einformung wird die negative Wirkung der Einschlüsse auf die Warmumformbarkeit, Dauerfestigkeit und Zähigkeit deutlich reduziert. Um diesen Effekt auch bei einem erfindungsgemäßen Stahlflachprodukt zu nutzen, kann ein erfindungsgemäßes Stahlflachprodukt optional mindestens 0,0005 Gew.-% Ca, insbesondere mindestens 0,0010 Gew.-%, bevorzugt mindestens 0,0020 Gew.-% enthalten. Der maximale Ca-Gehalt beträgt 0,01 Gew.-%, insbesondere maximal 0,007 Gew.-%, bevorzugt maximal 0,005 Gew.-%. Bei zu hohen Ca-Gehalten wächst die Wahrscheinlichkeit, dass sich nichtmetallische Einschlüsse unter Beteiligung von Calcium bilden, die den Reinheitsgrad des Stahles und auch seine Zähigkeit verschlechtern. Aus diesem Grund sollte eine Obergrenze des Ca-Gehalts von höchstens 0,005 Gew.-%, vorzugsweise höchstens 0,003 Gew-%, insbesondere höchstens 0,002 Gew.-%, bevorzugt maximal 0,001 Gew.-% eingehalten werden.

Wolfram ("W") kann optional in Gehalten von 0,001 - 1,0 Gew.-% zur Verlangsamung der Ferritbildung hinzulegiert werden. Ein positiver Effekt auf die Härtbarkeit ergibt sich bereits bei W-Gehalten von mindestens 0,001 Gew.-%. Aus Kostengründen wird maximal 1,0 Gew.-% Wolfram hinzulegiert.

Bei bevorzugten Weiterbildungen beträgt die Summe des Mn-Gehaltes und des Cr-Gehaltes ("Mn+Cr") mehr als 0,7 Gew.-%, insbesondere mehr als 0,8 Gew.-%, bevorzugt mehr als 1,1 Gew.-%. Unterhalb einer Mindestsumme beider Elemente geht deren notwendige umwandlungshemmende Wirkung verloren. Unabhängig davon beträgt die Summe des Mn-Gehaltes und des Cr-Gehaltes weniger als 3,5 Gew.-%, bevorzugt weniger als 2,5 Gew.-%, insbesondere weniger als 2,0 Gew.-%, besonders bevorzugt weniger als 1,5 Gew.-%. Die oberen Grenzwerte beider Elemente entstehen durch die Sicherstellung der Beschichtungsperformance und zur Gewährleistung ausreichenden Schweißverhaltens.

Die vorstehenden Erläuterungen zu Elementgehalten und deren bevorzugten Grenzen für die ersten und zweite Ausführungsform gelten entsprechend für das im folgenden beschriebene Verfahren zum Herstellen eines Stahlflachproduktes, für das Blechformteil und für das Verfahren zur Herstellung eines Blechformteiles.

Das Stahlflachprodukt umfasst bevorzugt einen Korrosionsschutzüberzug, um das Stahlsubstrat beim Warmumformen und bei der Verwendung des erzeugten Stahlbauteils vor Oxidation und Korrosion zu schützen.

Bei einer speziellen Ausführungsform umfasst das Stahlflachprodukt bevorzugt einen Korrosionsschutzüberzug auf Aluminium-Basis. Dabei kann der Korrosionsschutzüberzug einseitig oder beidseitig auf dem Stahlflachprodukt aufgebracht sein. Als die beiden Seiten des Stahlflachproduktes werden die beiden sich gegenüberliegenden großen Flächen des Stahlflachproduktes bezeichnet. Die schmalen Flächen werden als Kanten bezeichnet.

Ein solcher Korrosionsschutzüberzug wird bevorzugt durch Schmelztauchbeschichten des Stahlflachproduktes erzeugt. Dabei wird das Stahlflachprodukt durch eine flüssige Schmelze geführt, die aus 0,1 - 15 Gew.-% Si, bevorzugt mehr als 1,0 Gew.-% Si, optional 2-4 Gew.-% Fe, optional bis zu 5 Gew.-% Alkali- oder Erdalkalimetalle, bevorzugt bis zu 1,0% Gew.-% Alkali- oder Erdalkalimetalle, und optional bis zu 15 % Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest Aluminium besteht.

Bei einer bevorzugten Variante beträgt der Si-Gehalt der Schmelze 1,0 - 3,5 Gew.-% oder 7 - 12 Gew.-%, insbesondere 8-10 Gew.-%.

Bei einer bevorzugten Variante umfasst der optionale Gehalt an Alkali- oder Erdalkalimetallen in der Schmelze 0,1 - 1,0 Gew.-% Mg, insbesondere 0,1 - 0,7 Gew.-% Mg, bevorzugt 0,1 - 0,5 Gew.-% Mg. Weiterhin kann der optionale Gehalt an Alkali- oder Erdalkalimetallen in der Schmelze insbesondere mindestens 0,0015 Gew.-% Ca, insbesondere mindestens 0,01 Gew.-% Ca, umfassen.

Beim Schmelztauchbeschichten diffundiert Eisen aus dem Stahlsubstrat in den flüssigen Überzug, so dass der Korrosionsschutzüberzug des Stahlflachproduktes beim Erstarren insbesondere eine Legierungsschicht und eine Al-Basisschicht aufweist.

Die Legierungsschicht liegt auf dem Stahlsubstrat auf und grenzt unmittelbar an dieses an. Die Legierungsschicht wird im Wesentlichen aus Aluminium und Eisen gebildet. Die übrigen Elemente aus dem Stahlsubstrat oder der Schmelzenzusammensetzung reichern sich nicht signifikant in der Legierungsschicht an. Bevorzugt besteht die Legierungsschicht 35-60 Gew.-% Fe, bevorzugt $\alpha$-Eisen, optionalen weiteren Bestandteilen, deren Gehalte in Summe auf höchstens 5,0 Gew.-%, bevorzugt 2,0% beschränkt sind, und als Rest Aluminium, wobei der Al-Gehalt bevorzugt in Richtung Oberfläche ansteigt. Die optionalen weiteren Bestandteile beinhalten insbesondere die übrigen Bestandteile der Schmelze (das heißt Silizium und gegebenenfalls Alkali- oder Erdalkalimetalle, insbesondere Mg bzw. Ca) und die übrigen Anteile des Stahlsubstrates zusätzlich zu Eisen.

Die Al-Basisschicht liegt auf der Legierungsschicht und grenzt unmittelbar an diese an. Bevorzugt entspricht die Zusammensetzung der Al-Basisschicht der Zusammensetzung der Schmelze des Schmelzbades. Das heißt, sie besteht aus 0,1 - 15 Gew.-% Si, optional 2 - 4 Gew.-% Fe, optional bis zu 5,0 Gew.-% Alkali- oder Erdalkalimetalle, bevorzugt bis zu 1,0 Gew.-% Alkali- oder Erdalkalimetalle, optional bis zu 15 Gew.-% Zn, bevorzugt bis zu 10 Gew.-% Zn und optionalen weiteren Bestandteilen, deren Gehalte in Summe auf höchstens 2,0 Gew.-% beschränkt sind, und als Rest Aluminium.

Bei einer bevorzugten Variante der Al-Basisschicht umfasst der optionale Gehalt an Alkali- oder Erdalkalimetallen 0,1 - 1,0 Gew.-% Mg, insbesondere 0,1 - 0,7 Gew.-% Mg, bevorzugt 0,1 - 0,5 Gew.-% Mg. Weiterhin kann der optionale Gehalt an Alkali- oder Erdalkalimetallen in der Al-Basisschicht insbesondere mindestens 0,0015 Gew.-% Ca, insbesondere mindestens 0,1 Gew.-% Ca, umfassen.

Bei einer weiter bevorzugten Variante des Korrosionsschutzüberzuges ist der Si-Gehalt in der Legierungsschicht geringer als der Si-Gehalt in der Al-Basisschicht.

Der Korrosionsschutzüberzug hat bevorzugt eine Dicke von 5 bis 60 $\mu$m, insbesondere von 10 bis 40 $\mu$m. Das Auflagengewicht des Korrosionsschutzüberzuges beträgt insbesondere $30 - 360 \frac{g}{m^2}$ bei beidseitigen Korrosionsschutzüberzügen, bzw. $15 - 180 \frac{g}{m^2}$ bei der einseitigen Variante. Bevorzugt beträgt das Auflagengewicht des Korrosionsschutzüberzuges $100\text{-}200 \frac{g}{m^2}$ bei beidseitigen Überzügen, bzw. $50\text{-}100 \frac{g}{m^2}$ für einseitige Überzüge. Besonders bevorzugt beträgt das Auflagengewicht des Korrosionsschutzüberzuges $120\text{-}180 \frac{g}{m^2}$ bei beidseitigen Überzügen, bzw. $60\text{-}90 \frac{g}{m^2}$ für einseitige Überzüge.

Die Dicke der Legierungsschicht ist bevorzugt kleiner als 20 $\mu$m, besonders bevorzugt kleiner 16 $\mu$m, insbesondere kleiner 12 $\mu$m, besonders bevorzugt kleiner 10 $\mu$m, bevorzugt kleiner 8 $\mu$m, insbesondere kleiner 5 $\mu$m. Die Dicke der Al-Basisschicht ergibt sich aus der Differenz der Dicken von Korrosionsschutzüberzug und Legierungsschicht.

Bevorzugt beträgt die Dicke der Al-Basisschicht auch bei dünnen Korrosionsschutzüberzügen mindestens 1 $\mu$m.

Bei einer bevorzugten Variante umfasst das Stahlflachprodukt eine auf dem Korrosionsschutzüberzug angeordnete Oxidschicht. Die Oxidschicht liegt dabei insbesondere auf der Al-Basisschicht und bildet bevorzugt den äußeren Abschluss des Korrosionsschutzüberzuges.

Die Oxidschicht besteht insbesondere zu mehr als 80 Gew.-% aus Oxiden, wobei der Hauptanteil der Oxide (d.h. mehr als 50 Gew.-% der Oxide) Aluminiumoxid ist. Optional sind in der Oxidschicht zusätzlich zu Aluminiumoxid Hydroxide und / oder Magnesiumoxid alleine oder als Mischung vorhanden. Bevorzugt besteht der nicht von den Oxiden und optional vorhandenen Hydroxiden eingenommene Rest der Oxidschicht aus Silizium, Aluminium, Eisen und/oder Magnesium in metallischer Form. Für die optionale Ausführungsform mit Zink als Bestandteil der Al-Basisschicht sind auch Zinkoxidbestandteile in der Oxidschicht vorhanden.

Bevorzugt hat die Oxidschicht des Stahlflachproduktes eine Dicke, die größer ist als 50 nm. Insbesondere beträgt die Dicke der Oxidschicht maximal 500 nm.

Bei einer alternativen Ausgestaltung umfasst das Stahlflachprodukt einen Korrosionsschutzüberzug auf Zink-Basis. Dabei kann der Korrosionsschutzüberzug einseitig oder beidseitig auf dem Stahlflachprodukt aufgebracht sein. Als die beiden Seiten des Stahlflachproduktes werden die beiden sich gegenüberliegenden großen Flächen des Stahlflachproduktes bezeichnet. Die schmalen Flächen werden als Kanten bezeichnet.

Ein solcher Korrosionsschutzüberzug auf Zink-Basis umfasst bevorzugt 0,2 - 6,0 Gew.-% Al, 0,1 - 10,0 Gew.-% Mg, optional 0,1 - 40 Gew.-% Mangan oder Kupfer, optional 0,1 - 10,0 Gew.-% Cer, optional höchstens 0,2 Gew.-% weitere Elemente, unvermeidbare Verunreinigung und als Rest Zink. Insbesondere beträgt der Al-Gehalt maximal 2,0 Gew.-%, bevorzugt maximal 1,5 Gew.-%.

Der Mg-Gehalt beträgt insbesondere maximal 3,0 Gew.-%, bevorzugt maximal 1,0 Gew.-%. Der Korrosionsschutzüberzug kann durch Schmelztauchbeschichten oder durch physikalische Gasphasenabscheidung oder durch elektrolytische Verfahren aufgebracht werden.

Weiterhin weist die Streckgrenze eines besonders ausgebildeten Stahlflachprodukts einen kontinuierlichen Verlauf oder nur eine geringe Ausprägung auf. Kontinuierlicher Verlauf bedeutet im Sinne der Anmeldung, dass keine ausgeprägte Streckgrenze vorliegt. Eine Streckgrenze mit kontinuierlichem Verlauf kann auch als Dehngrenze Rp0,2 bezeichnet werden. Unter einer Streckgrenze mit geringer Ausprägung wird vorliegend eine ausgeprägte Streckgrenze verstanden, bei welcher die Differenz $\Delta$Re zwischen oberem Streckgrenzenwert ReH und unterem Streckgrenzenwert ReL höchstens 50 MPa beträgt. Es gilt:

$$\Delta Re = (ReH - ReL) \leq 50 \text{ MPa mit } ReH = \text{obere Streckgrenze in MPa und } ReL = \text{untere Streckgrenze in MPa.}$$

Das erfindungsgemäße Verfahren zur Herstellung eines Stahlflachproduktes für die Warmumformung mit einem Korrosionsschutzüberzug umfassend folgende Arbeitsschritte:

a) Zurverfügungstellen einer Bramme oder einer Dünnbramme, die aus Stahl, der neben Eisen und unvermeidbaren Verunreinigungen (in Gew.-%) aus

| | |
|---|---|
| C: | 0,06 - 0,5 %, |
| Si: | 0,05 - 0,6 %, |
| Mn: | 0,4-3,0%, |
| Al: | 0,06 - 1,0 %, |
| B: | 0,0005 - 0,01 % |
| V: | 0,010 - 0,50 %, |
| P: | $\leq$ 0,03 %, |
| S: | $\leq$ 0,02 %, |
| N: | $\leq$ 0,02 %, |
| Sn: | $\leq$ 0,03 %, |
| As: | $\leq$ 0,01 % |

sowie optional einem oder mehreren der Elemente "Ce, La, Nb, Cr, Cu, Mo, Ni, Ca, W" in folgenden Gehalten

| | |
|---|---|
| Ce+La: | 0,01-0,03 % |
| Ti: | 0,0005 - 0,10 % |

(fortgesetzt)

| | |
|---|---|
| Nb: | 0,001 - 0,2 %, |
| Cr: | 0,01 - 1,0%, |
| Cu: | 0,01 - 0,2 %, |
| Mo: | 0,002 - 0,3 %, |
| Ni: | 0,01 - 0,5 %, |
| Ca: | 0,0005 - 0,005 %, |
| W: | 0,001 - 1,00 % |

besteht;
oder aus

| | |
|---|---|
| C: | 0,06 - 0,5 %, |
| Si: | 0,05 - 0,6 %, |
| Mn: | 0,4-3,0%, |
| B: | 0,0005 - 0,01 % |
| V: | 0,010 - 0,50 %, |
| P: | ≤ 0,03 %, |
| S: | ≤ 0,02 %, |
| N: | ≤ 0,02 %, |
| Sn: | ≤ 0,03 %, |
| As: | ≤ 0,01 % |
| Ce+La: | 0,01-0,03 % |

sowie optional einem oder mehreren der Elemente "Al, Nb, Cr, Cu, Mo, Ni, Ca, W" in folgenden Gehalten

| | |
|---|---|
| Al: | ≤1,0 %, |
| Ti: | 0,0005 - 0,10 % |
| Nb: | 0,001 - 0,2 %, |
| Cr: | 0,01 - 1,0%, |
| Cu: | 0,01 - 0,2 %, |
| Mo: | 0,002 - 0,3 %, |
| Ni: | 0,01 - 0,5 %, |
| Ca: | 0,0005 - 0,005 %, |
| W: | 0,001 - 1,00 % |

besteht;

b) Durcherwärmen der Bramme oder Dünnbramme bei einer Temperatur (T1) von 1100 - 1400 °C;

c) Optionales Vorwalzen der durcherwärmten Bramme oder Dünnbramme zu einem Zwischenprodukt mit einer Zwischenprodukttemperatur (T2) von 1000 - 1200 °C;

d) Warmwalzen zu einem warmgewalzten Stahlflachprodukt, wobei die Endwalz-temperatur (T3) 750 - 1000 °C beträgt;

e) Optionales Haspeln des warmgewalzten Stahlflachprodukts, wobei die Haspel-temperatur (T4) höchstens 700 °C beträgt;

f) Optionales Entzundern des warmgewalzten Stahlflachprodukts;

g) Optionales Kaltwalzen des Stahlflachprodukts, wobei der Kaltwalzgrad mindestens 30 % beträgt;

h) Glühen des Stahlflachprodukts bei einer Glühtemperatur (T5) von 650 - 900 °C;

i) Abkühlen des Stahlflachprodukts auf eine Eintauchtemperatur (T6), welche 650 - 800 °C, bevorzugt 670 - 800 °C beträgt;

j) Beschichten des auf die Eintauchtemperatur abgekühlten Stahlflachprodukts mit einem Korrosionsschutzüberzug durch Schmelztauchbeschichten in einem Schmelzenbad mit einer Schmelzentemperatur (T7) 660 - 800 °C, bevorzugt 680 - 740 °C;

k) Abkühlen des beschichteten Stahlflachprodukts auf Raumtemperatur, wobei die erste Abkühldauer $t_{mT}$ im Temperaturbereich zwischen 600 °C und 450 °C mehr als 10s, insbesondere mehr als 14s beträgt und die zweite Abkühldauer $t_{nT}$ im Temperaturbereich zwischen 400 °C und 300 °C mehr als 8s, insbesondere mehr als 12s beträgt;

l) Optionales Dressieren des beschichteten Stahlflachprodukts.

In Arbeitsschritt a) wird ein entsprechend der erfindungsgemäß für das Stahlflachprodukt vorgegebenen Legierung zusammengesetztes Halbzeug zur Verfügung gestellt. Dies kann eine im konventionellen Brammenstrangguss oder im Dünnbrammenstrangguss erzeugte Bramme sein.

In Arbeitsschritt b) wird das Halbzeug bei einer Temperatur (T1) von 1100 - 1400 °C durcherwärmt. Sollte das Halbzeug nach dem Vergießen abgekühlt sein, so wird das Halbzeug zum Durcherwärmen zunächst auf 1100 - 1400 °C wiedererwärmt. Die Durcherwärmungstemperatur sollte mindestens 1100 °C betragen, um eine gute Verformbarkeit für den nachfolgenden Walzprozess sicherzustellen. Die Durcherwärmungstemperatur sollte nicht mehr als 1400 °C betragen, um Anteile schmelzflüssiger Phasen im Halbzeug zu vermeiden.

Im optionalen Arbeitsschritt c) wird das Halbzeug zu einem Zwischenprodukt vorgewalzt. Dünnbrammen werden üblicherweise keiner Vorwalzung unterzogen. Dickbrammen, die zu Warmbändern ausgewalzt werden sollen, können bei Bedarf einer Vorwalzung unterzogen werden. In diesem Fall sollte die Temperatur des Zwischenprodukts (T2) am Ende des Vorwalzens mindestens 1000 °C betragen, damit das Zwischenprodukt genügend Wärme für den nachfolgenden Arbeitsschritt des Fertigwalzens enthält. Hohe Walztemperaturen können jedoch auch ein Kornwachstum während des Walzvorgangs fördern, was sich nachteilig auf die mechanischen Eigenschaften des Stahlflachprodukts auswirkt. Um das Kornwachstum während des Walzvorgangs gering zu halten, soll die Temperatur des Zwischenprodukts am Ende des Vorwalzens nicht mehr als 1200 °C betragen.

In Arbeitsschritt d) wird die Bramme oder Dünnbramme oder, wenn Arbeitsschritt c) ausgeführt wurde, das Zwischenprodukt zu einem warmgewalzten Stahlflachprodukt gewalzt. Wurde Arbeitsschritt c) ausgeführt, so wird das Zwischenprodukt typischerweise unmittelbar nach dem Vorwalzen fertiggewalzt. Typischerweise beginnt das Fertigwalzen spätestens 90 s nach dem Ende des Vorwalzens. Die Bramme, die Dünnbramme oder, wenn Arbeitsschritt c) ausgeführt wurde, das Zwischenprodukt werden bei einer Endwalztemperatur (T3) ausgewalzt. Die Endwalztemperatur, das heißt die Temperatur des fertig warmgewalzten Stahlflachprodukts am Ende des Warmwalzvorgangs, beträgt 750 - 1000 °C. Bei Endwalztemperaturen kleiner 750 °C nimmt die Menge an freiem Vanadium ab, da größere Mengen an Vanadiumkarbiden ausgeschieden werden. Die beim Fertigwalzen ausgeschiedenen Vanadiumkarbide sind sehr groß. Sie weisen typischerweise eine mittlere Korngröße von 30 nm oder mehr auf und werden in nachfolgenden Glühprozessen, wie sie zum Beispiel vor dem Schmelztauchbeschichten durchgeführt werden, nicht mehr aufgelöst. Die Endwalztemperatur ist auf Werte von höchstens 1000 °C begrenzt, um einer Vergröberung der Austenitkörner vorzubeugen. Außerdem sind Endwalztemperaturen von höchstens 1000 °C prozesstechnisch relevant zur Einstellung von Haspeltemperaturen (T4) kleiner 700 °C.

Das Warmwalzen des Stahlflachprodukts kann als kontinuierliches Warmbandwalzen oder als reversierendes Walzen erfolgen. Arbeitsschritt e) sieht für den Fall des kontinuierlichen Warmbandwalzens ein optionales Haspeln des warmgewalzten Stahlflachprodukts vor. Dazu wird das Warmband nach dem Warmwalzen innerhalb von weniger als 50 s auf eine Haspeltemperatur (T4) abgekühlt. Als Kühlmedium kann hierfür beispielsweise Wasser, Luft oder eine Kombination aus beidem verwendet werden. Die Haspeltemperatur (T4) sollte höchstens 700 °C betragen, um die Bildung großer Vanadiumkarbide zu vermeiden. Die Haspeltemperatur ist prinzipiell nicht nach unten beschränkt. Allerdings haben sich Haspeltemperaturen von mindestens 500 °C als günstig für die Kaltwalzbarkeit erwiesen. Anschließend wird das gehaspelte Warmband in konventioneller Weise an Luft auf Raumtemperatur abgekühlt.

In Arbeitsschritt f) wird das warmgewalzte Stahlflachprodukt optional in konventioneller Weise durch Beizen oder durch eine andere geeignete Behandlung entzundert.

Das von Zunder gereinigte warmgewalzte Stahlflachprodukt kann vor der Glühbehandlung in Arbeitsschritt g) optional einem Kaltwalzen unterzogen werden, um beispielsweise höhere Anforderungen an die Dickentoleranzen des Stahlflachprodukts zu erfüllen. Der Kaltwalzgrad (KWG) sollte dabei mindestens 30 % betragen, um in das Stahlflachprodukt genügend Verformungsenergie für eine schnelle Rekristallisation einzubringen. Unter dem Kaltwalzgrad KWG wird dabei der Quotient aus der Dickenabnahme beim Kaltwalzen ΔdKW durch die Warmbanddicke d verstanden:

$$KWG = \Delta dKW/d$$

mit ΔdKW = Dickenabnahme beim Kaltwalzen in mm und d = Warmbanddicke in mm, wobei sich die Dickenabnahme ΔdKW aus der Differenz der Dicke des Stahlflachprodukts vor dem Kaltwalzen zur Dicke des Stahlflachprodukts nach dem Kaltwalzen ergibt. Beim Stahlflachprodukt vor dem Kaltwalzen handelt es sich üblicherweise um ein Warmband der Warmbanddicke d. Das Stahlflachprodukt nach dem Kaltwalzen wird üblicherweise auch als Kaltband bezeichnet. Der Kaltwalzgrad kann prinzipiell sehr hohe Werte von über 90 % annehmen. Allerdings haben sich Kaltwalzgrade von höchstens 80 % als günstig zur Vermeidung von Bandrissen erwiesen.

In Arbeitsschritt h) wird das Stahlflachprodukt einer Glühbehandlung bei Glühtemperaturen (T5) von 650 - 900 °C unterzogen. Dazu wird das Stahlflachprodukt zunächst innerhalb von 10 bis 120 s auf die Glühtemperatur erwärmt und dann 30 bis 600 s bei der Glühtemperatur gehalten. Die Glühtemperatur beträgt mindestens 650 °C, bevorzugt mindestens 720 °C. Bei Glühtemperaturen oberhalb von 900 °C sind aus ökonomischen Gründen nicht wünschenswert.

In Arbeitsschritt i) wird das Stahlflachprodukt nach dem Glühen auf eine Eintauchtemperatur (T6) abgekühlt, um es für die anschließende Beschichtungsbehandlung vorzubereiten. Die Eintauchtemperatur ist kleiner als die Glühtemperatur und wird auf die Temperatur des Schmelzbads abgestimmt. Die Eintauchtemperatur beträgt 600 - 800 °C, bevorzugt mindestens 650°C, besonders bevorzugt mindestens 670 °C, besonders bevorzugt höchstens 700 °C. Für eine besonders homogene Grenzschichtausbildung ist es wichtig, dass genügend thermische Energie in der Grenzschicht zwischen Stahlsubstrat und Aluminiumschmelze vorliegt. Dies ist bei tieferen Temperaturen als 600 °C nicht der Fall, so dass sich unerwünschte Verbindungen bilden können, deren spätere Rückumwandlung zu Poren führen kann. Ab den bevorzugten Eintauchtemperaturen erhöht sich die Diffusionsgeschwindigkeit von Eisen in Aluminium nochmals signifikant, so dass bereits zu Beginn des Überzugsprozesses vermehrt Eisen in die noch flüssige Grenzschicht eindiffundieren kann. Die Dauer der Abkühlung des geglühten Stahlflachprodukts von der Glühtemperatur T5 auf die Eintauchtemperatur T6 beträgt bevorzugt 10 -180 s. Insbesondere weicht die Eintauchtemperatur T6 von der Temperatur des Schmelzenbades T7 um nicht mehr als 30K, insbesondere nicht mehr als 20K, bevorzugt nicht mehr als 10K ab.

Das Stahlflachprodukt wird in Arbeitsschritt j) einer Beschichtungsbehandlung unterzogen. Die Beschichtungsbehandlung erfolgt bevorzugt mittels kontinuierlichem Schmelztauchbeschichten. Die Beschichtung kann nur auf einer Seite, auf beiden Seiten oder auf allen Seiten des Stahlflachprodukts aufgebracht werden. Die Beschichtungsbehandlung erfolgt bevorzugt als Schmelztauchbeschichtungsprozess, insbesondere als kontinuierlicher Prozess. Dabei kommt das Stahlflachprodukt üblicherweise auf allen Seiten mit dem Schmelzbad in Kontakt, so dass es allseits beschichtet wird. Das Schmelzbad, das die auf das Stahlflachprodukt aufzubringende Legierung in flüssiger Form enthält, weist typischerweise eine Temperatur (T7) von 660 - 800 °C, bevorzugt 680 - 740°C auf. Als zum Beschichten alterungsbeständiger Stahlflachprodukte mit einem Korrosionsschutzüberzug besonders geeignet haben sich Legierungen auf Aluminiumbasis erwiesen. In einem solchen Fall enthält das Schmelzbad 0,1 bis 15 Gew.-% Si bevorzugt mehr als 1,0 % Si, optional 2 - 4 Gew.-% Fe, optional bis zu 5 Gew.-% Alkali- oder Erdalkalimetalle, bevorzugt bis zu 1,0 % Alkali- oder Erdalkalimetalle, und optional bis zu 15 Gew.-% Zn, insbesondere bi zu 10 Gew.-% Zn und optionalen weiteren Bestandteilen, deren Gehalte in Summe auf höchstens 2,0 Gew.-% beschränkt sind, und als Rest Aluminium. Bei einer bevorzugten Variante beträgt der Si-Gehalt der Schmelze 1,0 - 3,5 Gew.-% oder 7 - 12 Gew.-%, insbesondere 8 - 10 Gew.-%. Bei einer bevorzugten Variante umfasst der optionale Gehalt an Alkali- oder Erdalkalimetallen in der Schmelze 0,1 - 1,0 Gew.-% Mg, insbesondere 0,1 - 0,7 Gew.-% Mg, bevorzugt 0,1 - 0,5 Gew.-% Mg. Weiterhin kann der optionale Gehalt an Alkali- oder Erdalkalimetallen in der Schmelze insbesondere mindestens 0,0015 Gew.-% Ca, insbesondere mindestens 0,01 Gew.-% Ca, umfassen.

Nach der Beschichtungsbehandlung wird das beschichtete Stahlflachprodukt in Arbeitsschritt k) auf Raumtemperatur abgekühlt. Dabei beträgt eine erste Abkühldauer $t_{mT}$ im Temperaturbereich zwischen 600 °C und 450 °C (mittlerer Temperaturbereich mT) mehr als 5s, bevorzugt mehr als 10s, insbesondere mehr als 14s beträgt und eine zweite Abkühldauer $t_{nT}$ im Temperaturbereich zwischen 400 °C und 300 °C (niedriger Temperaturbereich nT) mehr als 4s, bevorzugt mehr als 8s, insbesondere mehr als 12s.

Dabei kann die erste Abkühldauer $t_{mT}$ im Temperaturbereich zwischen 600 °C und 450 °C (mittlerer Temperaturbereich mT) realisiert sein durch ein langsames, kontinuierliches Abkühlen oder auch durch ein Halten bei einer Temperatur für eine gewisse Zeit in diesem Temperaturbereich. Möglich ist sogar ein Zwischenheizen. Wichtig ist lediglich, dass das Stahlflachprodukt mindestens für eine Zeitdauer Abkühldauer $t_{mT}$ im Temperaturbereich zwischen 600 °C und 450 °C bleibt. In diesem Temperaturbereich liegt zum einen eine signifikante Diffusionsgeschwindigkeit von Eisen in Aluminium vor und zum anderen ist die Diffusion von Aluminium in Stahl gehemmt, da die Temperatur unter der halben Schmelztemperatur von Stahl liegt. Dies ermöglicht eine Diffusion von Eisen in den Korrosionsschutzüberzug ohne starke Diffusion von Aluminium in das Stahlsubstrat.

Die Diffusion von Eisen in den Korrosionsschutzüberzug hat gleich mehrere Vorteile: Zum einen wird das Aufschmelzen des Korrosionsschutzüberzugs beim Austenitisieren vor dem Presshärten verzögert. Zum anderem kommt es zu einer Homogenisierung der Wärmeausdehnungskoeffizienten von Korrosionsschutzüberzug und Substrat. Das heißt der Übergangsbereich zwischen Wärmeausdehnungskoeffizient Substrat und Oberfläche wird breiter, was die thermischen Spannungen beim Wiederaufheizen reduziert.

Gleichzeitig hätte das Eindiffundieren von Aluminium in das Stahlsubstrat erhebliche Nachteile: Durch die sehr hohe Affinität von Aluminium zu Stickstoff kann ein hoher Aluminium-Gehalt dazu führen, dass sich Stickstoff aus feinen Ausscheidungen, wie Vanadiumkarbonitriden, Niobkarbonitriden oder Titankarbonitriden löst und sich stattdessen grobe Ausscheidungen, wie Aluminiumnitride, bevorzugt auf den Korngrenzen bilden. Diese würden die Crashperformance verschlechtern, wie auch den Biegewinkel verringern. Außerdem destabilisiert dies die feinen Ausscheidungen (z.B. die V-haltigen bzw. Nb-haltigen Ausscheidungen) im obersten Substratbereich, welche wichtig für viele bevorzugte Eigenschaften sind. Weiterhin würde die inhomogene Diffusionsgeschwindigkeit von Aluminium im Stahlsubstrat in Ferrit gegenüber Perlit/Bainit/Martensit zu einer ungleichmäßigen Verteilung von Al in der Randschicht des Stahlsubstrats führen. Dies sollte ebenfalls zur Verbesserung der Crash- und Biegeperformance verhindert werden. Diese Nachteile des Eindiffundierens von Aluminium in das Stahlsubstrat werden durch Hemmung daher reduziert oder vermieden.

Durch die bevorzugte erste Abkühldauer $t_{mT}$ (14s) nimmt die Eisenkonzentration in der Übergangsgrenzschicht soweit zu, dass sich dadurch die Aktivität von Aluminium im Überzug direkt an der Substratgrenze weiter verringert. Dies führt dann zu einer noch weiter verringerten Aluminiumaufnahme ins Substrat bei der Austenitisierung vor dem Presshärten mit den damit verbundenen oben beschriebenen Vorteilen.

Die zweite Abkühldauer $t_{nT}$ im Temperaturbereich zwischen 400 °C und 300 °C (niedriger Temperaturbereich nT) kann ebenfalls realisiert sein durch ein langsames, kontinuierliches Abkühlen oder auch durch ein Halten bei einer Temperatur für eine gewisse Zeit in diesem Temperaturbereich.

Möglich ist sogar ein Zwischenheizen. Wichtig ist lediglich, dass das Stahlflachprodukt mindestens für eine Zeitdauer Abkühldauer $t_{nT}$ im Temperaturbereich zwischen 400 °C und 300 °C bleibt.

In diesem Temperaturbereich besteht noch eine gewisse Diffusionsgeschwindigkeit von Kohlenstoff im Stahlsubstrat, während die thermodynamische Löslichkeit sehr gering ist. Somit diffundiert Kohlenstoff zu Gitterstörungen und sammelt sich dort, z.B. zu gelösten V- oder Nb-Atomen. Diese weiten durch ihr deutlich höheres Atomvolumen das Atomgitter auf und vergrößern somit die Tetraeder- und Oktaederlücken im Atomgitter, so dass die lokale Löslichkeit von C erhöht ist. Dadurch ergeben sich Cluster von C und V und/oder Nb, welche sich dann im Austenitisierungsschritt und/oder Transferschritt der Warmumformung zu sehr feinen Ausscheidungen umwandeln. Diese führen einerseits zu einem verfeinerten Austenitgefüge und stellen andererseits Wasserstofffallen dar, die zu einer Reduktion des freien Wasserstoffgehalts führen.

Bei der bevorzugten Haltezeit von mehr als 12s bilden sich zudem sehr feine Eisenkarbide (sogenannte Übergangskarbide), welche sich beim Austenitisieren wiederum sehr schnell auflösen und zu zusätzlichen Austenitkeimen und somit einem noch feineren Austenitgefüge und damit auch Härtungsgefüge führen.

Das beschichtete Stahlflachprodukt kann optional einem Dressieren mit einem Dressiergrad von bis zu 2% unterzogen werden, um die Oberflächenrauheit des Stahlflachprodukts zu verbessern.

Die Erfindung betrifft weiterhin ein Blechformteil geformt aus einem Stahlflachprodukt umfassend ein zuvor erläutertes Stahlsubstrat.

Insbesondere umfasst das Blechformteil zusätzlich einen Korrosionsschutzüberzug. Der Korrosionsschutzüberzug hat den Vorteil, dass er Zunderbildung verhindert während der Austenitisierung beim Warmumformen. Weiterhin schützt ein solcher Korrosionsschutzüberzug das geformte Blechformteil gegen Korrosion.

Bei einer speziellen Ausführungsform umfasst das Blechformteil bevorzugt einen Korrosionsschutzüberzug auf Aluminium-Basis. Bevorzugt umfasst der Korrosionsschutzüberzug des Blechformteils eine Legierungsschicht und eine Al-Basisschicht. Beim Blechformteil wird die Legierungsschicht auch häufig als Interdiffusionsschicht bezeichnet.

Die Dicke des Korrosionsschutzüberzuges beträgt bevorzugt mindestens 10 $\mu$m, besonders bevorzugt mindestens 20 $\mu$m, insbesondere mindestens 30 $\mu$m.

Die Dicke der Legierungsschicht ist bevorzugt kleiner als 30 $\mu$m, besonders bevorzugt kleiner 20 $\mu$m, insbesondere kleiner 16 $\mu$m, besonders bevorzugt kleiner 12 $\mu$m. Die Dicke der Al-Basisschicht ergibt sich aus der Differenz der Dicken von Korrosionsschutzüberzug und Legierungsschicht.

Die Legierungsschicht liegt dabei auf dem Stahlsubstrat auf und grenzt unmittelbar an dieses an. Bevorzugt besteht die Legierungsschicht des Blechformteils aus 35 - 90 Gew.-% Fe, 0,1 - 10 Gew.-% Si, optional bis zu 0,5 Gew.-% Mg und optionalen weiteren Bestandteilen, deren Gehalte in Summe auf höchstens 2,0 Gew.-% beschränkt sind, und als Rest Aluminium. Durch das weitere Eindiffundieren von Eisen in die Legierungsschicht sind die Anteile von Si und Mg entsprechend niedriger als ihr jeweiliger Anteil in der Schmelze des Schmelzbades.

Die Legierungsschicht hat bevorzugt ein ferritisches Gefüge.

Die Al-Basisschicht des Blechformteils liegt auf der Legierungsschicht des Stahlbauteils und grenzt unmittelbar an diese an. Bevorzugt besteht die Al-Basisschicht des Stahlbauteils aus 35 - 55 Gew.-% Fe, 0,4 -10 Gew.-% Si, optional bis zu 0,5 Gew.-% Mg und optionalen weiteren Bestandteilen, deren Gehalte in Summe auf höchstens 2,0 Gew.-% beschränkt sind, und als Rest Aluminium.

Die Al-Basisschicht kann eine homogene Elementverteilung aufweisen, bei der die lokalen Elementgehalte um nicht mehr als 10 % variieren. Bevorzugte Varianten der Al-Basisschicht weisen dagegen siliziumarme Phasen und siliziumreiche Phasen auf. Siliziumarme Phasen sind dabei Gebiete, deren mittlerer Si-Gehalt mindestens 20 % weniger beträgt als der mittlere Si-Gehalt der Al-Basisschicht. Siliziumreiche Phasen sind dabei Gebiete, deren mittlerer Si-Gehalt mindestens 20 % mehr beträgt als der mittlere Si-Gehalt der Al-Basisschicht.

Bei einer bevorzugten Variante sind die siliziumreichen Phasen innerhalb der siliziumarmen Phase angeordnet. Insbesondere bilden die siliziumreichen Phasen mindestens eine 40 % durchgehende Schicht, die von siliziumarmen Gebieten begrenzt ist. Bei einer alternativen Ausführungsvariante sind die siliziumreichen Phasen inselförmig in der siliziumarmen Phase angeordnet.

Unter "inselförmig" wird im Sinne dieser Anmeldung eine Anordnung verstanden, bei der diskrete unzusammenhängende Bereiche von einem anderen Material umschlossen werden - es sich also "Inseln" eines bestimmten Materials in einem anderen Material befinden.

Bei einer bevorzugten Variante umfasst das Stahlbauteil eine auf dem Korrosionsschutzüberzug angeordnete Oxidschicht. Die Oxidschicht liegt dabei insbesondere auf der Al-Basisschicht und bildet bevorzugt den äußeren Abschluss des Korrosionsschutzüberzuges.

Die Oxidschicht des Stahlbauteils besteht insbesondere zu mehr als 80 Gew.-% aus Oxiden, wobei der Hauptanteil der Oxide (d.h. mehr als 50 Gew.-% der Oxide) Aluminiumoxid ist. Optional sind in der Oxidschicht zusätzlich zu Aluminiumoxid Hydroxide und / oder Magnesiumoxid alleine oder als Mischung vorhanden. Bevorzugt besteht der nicht von den Oxiden und optional vorhandenen Hydroxiden eingenommene Rest der Oxidschicht aus Silizium, Aluminium, Eisen und/oder Magnesium in metallischer Form.

Die Oxidschicht hat bevorzugt eine Dicke von mindestens 50 nm, insbesondere von mindestens 100 nm. Weiterhin beträgt die Dicke maximal 4 μm, insbesondere maximal 2 μm.

Bei einer speziellen Ausgestaltung umfasst das Blechformteil einen Korrosionsschutzüberzug auf Zink-Basis.

Ein solcher Korrosionsschutzüberzug auf Zink-Basis umfasst bevorzugt bis zu 80 Gew.-% Fe, 0,2 - 6,0 Gew.-% Al, 0,1 - 10,0 Gew.-% Mg, optional 0,1 - 40 Gew.-% Mangan oder Kupfer, optional 0,1 - 10,0 Gew.-% Cer, optional höchstens 0,2 Gew.-% weitere Elemente, unvermeidbare Verunreinigungen und als Rest Zink. Insbesondere beträgt der Al-Gehalt maximal 2,0 Gew.-%, bevorzugt maximal 1,5 Gew.-%. Der Fe-Gehalt, der durch Eindiffundieren zustande kommt, beträgt bevorzugt mehr als 20 Gew.-%, insbesondere mehr als 30 Gew.-%. Zudem beträgt der Fe-Gehalt insbesondere maximal 70 Gew-%, insbesondere maximal 60 Gew.-%. Der Mg-Gehalt beträgt insbesondere maximal 3,0 Gew.-%, bevorzugt maximal 1,0 Gew.-%. Der Korrosionsschutzüberzug kann durch Schmelztauchbeschichten oder durch physikalische Gasphasenabscheidung oder durch elektrolytische Verfahren aufgebracht werden.

Bei einer speziellen Weiterbildung weist das Stahlsubstrat des Blechformteils ein Gefüge mit zumindest teilweise mehr als 80 % Martensit und/oder unteren Bainit, bevorzugt zumindest teilweise mehr als 90 % Martensit und/oder unteren Bainit, insbesondere zumindest teilweise mehr als 95 % Martensit und/oder unteren Bainit, besonders bevorzugt zumindest teilweise mehr als 98 % Martensit und/oder unteren Bainit auf. Unter "Martensit und/oder unteren Bainit" ist zu verstehen, dass der jeweilige Gefügeanteil aus Martensit oder unteren Bainit oder einer Mischung von Martensit und/oder unterem Bainit besteht. Bei einer noch spezielleren Weiterbildung weist das Stahlsubstrat des Blechformteils ein Gefüge mit zumindest teilweise mehr als 80 % Martensit, bevorzugt zumindest teilweise mehr als 90 % Martensit, insbesondere zumindest teilweise mehr als 95 %, besonders bevorzugt zumindest teilweise mehr als 98 % auf. Unter "teilweise aufweisen" ist in diesem Zusammenhang zu verstehen, dass es Bereiche des Blechformteils gibt, die das genannte Gefüge aufweisen. Zusätzlich kann es auch Bereiche des Blechformteils geben, die ein anderes Gefüge aufweisen. Das Blechformteil weist also abschnittsweise oder bereichsweise das genannte Gefüge auf.

Durch den hohen Martensitgehalt bzw. Gehalt an unterem Bainit lassen sich sehr hohe Zugfestigkeiten und Streckgrenzen erreichen.

Das Blechformteil weist in einer weitergebildeten Variante zumindest teilweise eine Streckgrenze von mindestens 950 MPa, insbesondere mindestens 1100 MPa, insbesondere mindestens 1200 MPa, bevorzugt mindestens 1300 MPa, bevorzugt mindestens 1400 MPa.

Bei einer weitergebildeten Variante weist das Blechformteil zumindest teilweise eine Zugfestigkeit von mindestens 1000 MPa, insbesondere mindestens 1100 MPa, bevorzugt mindestens 1300 MPa, bevorzugt mindestens 1400 MPa, insbesondere mindestens 1600 MPa, bevorzugt mindestens 1700MPa, insbesondere mindestens 1800 MPa auf.

Insbesondere weist das Blechformteil zumindest teilweise eine Bruchdehnung A50 von mindestens 3,5 %, insbesondere mindestens 4 %, insbesondere mindestens 4,5 %, bevorzugt mindestens 5 %, besonders bevorzugt mindestens 6 % auf, insbesondere mindestens 6,5%.

Zudem kann das Blechformteil bei einer bevorzugten Variante zumindest teilweise einen Biegewinkel von mindestens 30°, insbesondere mindestens 40°, insbesondere mindestens 45° bevorzugt mindestens 47°, insbesondere mindestens 48°, besonders bevorzugt mindestens 49° aufweisen.

Der Biegewinkel hängt konkret von der Lage der Biegeachse ab. Üblicherweise unterscheidet man den Biegewinkel quer zur Walzrichtung (d.h. Biegeachse senkrecht zur Walzrichtung) und den Biegewinkel längs zur Walzrichtung (d.h. Biegeachse parallel zur Walzrichtung). Wenn ein Blechformteil einen bestimmten Biegewinkel aufweist (z.B. von mindestens 45°), so ist im Sinne dieser Anmeldung hierunter zu verstehen, dass beide Biegewinkel (sowohl parallel als auch senkrecht zur Walzrichtung) die entsprechende Relation erfüllen. Also beispielsweise beide mindestens 45° betragen.

Unter "teilweise aufweisen" ist in diesem Zusammenhang zu verstehen, dass es Bereiche des Blechformteils gibt, die die genannte mechanische Eigenschaft aufweisen. Zusätzlich kann es auch Bereiche des Blechformteils geben, deren mechanische Eigenschaft unterhalb des Grenzwertes liegt. Das Blechformteil weist also abschnittsweise oder bereichsweise die genannte mechanische Eigenschaft auf. Dies liegt daran, dass unterschiedliche Bereiche des Blechformteils unterschiedliche Wärmebehandlungen erfahren können. Beispielsweise können einzelne Bereiche schneller abgekühlt werden als andere, wodurch sich in den schneller abgekühlten Bereichen beispielsweise mehr Martensit bildet. Daher stellen sich auch unterschiedliche mechanische Eigenschaften in den verschiedenen Bereichen ein.

Die genannten mechanischen Kennzahlen haben sich als besonders vorteilhaft erwiesen, um den Einsatz in einem Automobil mit guter Crashperformance zu gewährleisten.

Bei einer speziellen Weiterbildung weist das Blechformteil feine Ausscheidungen im Gefüge, insbesondere in Form von Vanadium, Niob und/oder Titan- Karbonitriden auf.

Unter feinen Ausscheidungen werden im Sinne dieser Anmeldung alle Ausscheidungen mit einem Durchmesser kleiner als 30 nm bezeichnet. Die übrigen Ausscheidungen werden als grobe Ausscheidungen bezeichnet.

Bei einer bevorzugten Ausgestaltung beträgt der mittlere Durchmesser der feinen Ausscheidungen maximal 11 nm, bevorzugt maximal 10 nm, insbesondere maximal 8nm, bevorzugt maximal 6nm.

Bei einer weiteren bevorzugten Ausgestaltung weist das Blechformteil weitgehend feine Ausscheidungen im Gefüge auf. Im Sinne dieser Anmeldung ist unter weitgehend feinen Ausscheidungen zu verstehen, dass mehr als 80 %, bevorzugt mehr als 90 %, aller Ausscheidungen feine Ausscheidungen sind. Das heißt, dass mehr als 80 %, bevorzugt mehr als 90 %, aller Ausscheidungen einen Durchmesser haben, der kleiner ist als 30 nm.

Die feinen Ausscheidungen bedingen ein besonders feines Gefüge mit kleinen Korndurchmessern. Durch das feine Gefüge ist dieses homogener. Es ergibt sich eine Verbesserung der mechanischen Eigenschaften, insbesondere eine geringere Rissempfindlichkeit und damit verbesserte Biegeeigenschaften und eine höhere Bruchdehnung. Hierdurch stellt sich auch eine bessere Zähigkeit mit ausgeprägterem Brucheinschürverhalten ein.

Die realen mechanischen Kennwerte des Blechformteils werden ermittelt, indem das Blechformteil zunächst kathodisch mit Tauchlack beschichtet wird oder einer anlogen Wärmebehandlung unterzogen wird. Kathodische Tauchlackierungen werden im Regelfall für entsprechende Bauteile in der Automobilindustrie durchgeführt. Bei einer kathodischen Tauchlackierung werden die Bauteile zunächst in einer wässrigen Lösung beschichtet. Diese Beschichtung wird anschließend bei einer Wärmebehandlung eingebrannt. Dabei werden die Blechformteile auf 170°C erwärmt und bei dieser Temperatur für 20 Minuten gehalten. Anschließend werden die Bauteile an Umgebungsluft auf Raumtemperatur abgekühlt. Da diese Wärmebehandlung Einfluss auf die mechanischen Kenngrößen haben kann, sind im Sinne dieser Anmeldung die mechanischen Kenngrößen (Streckgrenze, Zugfestigkeit, Streckgrenzenverhältnis, Bruchdehnung A50, Biegewinkel, Vickershärte) so zu verstehen, dass sie an einem Bauteil mit einer kathodischen Tauchlackierung vorliegen oder an einem Bauteil, das nach der Umformung, einer Wärmebehandlung unterzogen wurde, die analog zu einer kathodischen Tauchlackierung ist. In der Praxis variiert die Wärmebehandlung der kathodischen Tauchlackierung geringfügig. Üblich sind Temperaturen von 165°C-180°C und Haltezeiten von 12 - 30 Minuten. Die Änderung der mechanischen Kenngrößen aufgrund dieser Variationen (165°C-180°C; 12-30 Minuten) bei der nachträglichen Wärmebehandlung sind jedoch vernachlässigbar.

In einer bevorzugten Variante umfasst das Blechformteil eine kathodische Tauchlackierung.

Eine weitergebildete Variante des Blechformteils zeichnet sich dadurch aus, dass der Korrosionsschutzüberzug ein Korrosionsschutzüberzug auf Aluminium-Basis ist und das Blechformteil eine Legierungsschicht und eine Al-Basisschicht umfasst.

Bei einer bevorzugten Ausführungsvariante weist das Blechformteil im modifizierten Slow Strain Rate Test eine Bruchspannung auf, die größer ist als 610 MPa, insbesondere größer ist als 625 MPa. Mit dieser Prüfung ist sichergestellt, dass die bevorzugte Ausführungsvariante weniger sensitiv auf Wasserstoff. Dies führt beim praktischen Einsatz des Blechformteils dazu, dass das Risiko von Wasserstoffversprödung reduziert ist.

Bei dem erfindungsgemäßen Blechformteil handelt es sich bevorzugt um ein Bauteil für ein Landfahrzeug, Seefahrzeug oder Luftfahrzeug. Besonders bevorzugt handelt es sich um ein Automobilteil, insbesondere um ein Karrosserieteil. Bevorzugt ist das Bauteil eine B-Säule, Längsträger, A-Säule, Schweller oder Querträger.

Beim erfindungsgemäßen Verfahren zum Herstellen eines in der voranstehend erläuterten Weise beschaffenen erfindungsgemäßen Blechformteils werden mindestens folgende Arbeitsschritte durchlaufen:

a) Bereitstellen eines Blechzuschnitts aus einem zuvor beschriebenen Stahlflachproduktes, insbesondere eines Stahlflachproduktes umfassend ein Stahlsubstrat aus Stahl, der neben Eisen und unvermeidbaren Verunreinigungen (in Gew.-%) aus

| | |
|---|---|
| C: | 0,06 - 0,5 %, |
| Si: | 0,05 - 0,6 %, |
| Mn: | 0,4-3,0%, |
| Al: | 0,06 - 1,0 %, |
| B: | 0,0005 - 0,01 % |
| V: | 0,010 - 0,50 %, |
| P: | $\leq$ 0,03 %, |
| S: | $\leq$ 0,02 %, |
| N: | $\leq$ 0,02 %, |
| Sn: | $\leq$ 0,03 %, |
| As: | $\leq$ 0,01 % |

sowie optional einem oder mehreren der Elemente "Ce, La, Nb, Cr, Cu, Mo, Ni, Ca, W" in folgenden Gehalten

| | |
|---|---|
| Ce+La: | 0,01-0,03 % |
| Ti: | 0,0005 - 0,10 % |
| Nb: | 0,001 - 0,2 %, |
| Cr: | 0,01 - 1,0%, |
| Cu: | 0,01 - 0,2 %, |
| Mo: | 0,002 - 0,3 %, |
| Ni: | 0,01 - 0,5 %, |
| Ca: | 0,0005 - 0,005 %, |
| W: | 0,001 -1,00 % |

besteht;
oder aus

| | |
|---|---|
| C: | 0,06 - 0,5 %, |
| Si: | 0,05 - 0,6 %, |
| Mn: | 0,4-3,0%, |
| B: | 0,0005 - 0,01 % |
| V: | 0,010 - 0,50 %, |
| P: | ≤ 0,03 %, |
| S: | ≤ 0,02 %, |
| N: | ≤ 0,02 %, |
| Sn: | ≤ 0,03 %, |
| As: | ≤ 0,01 % |
| Ce+La: | 0,01-0,03 % |

sowie optional einem oder mehreren der Elemente "Al, Nb, Cr, Cu, Mo, Ni, Ca, W" in folgenden Gehalten

| | |
|---|---|
| Al: | ≤1,0 %, |
| Ti: | 0,0005 - 0,10 % |
| Nb: | 0,001 - 0,2 %, |
| Cr: | 0,01 - 1,0%, |
| Cu: | 0,01 - 0,2 %, |
| Mo: | 0,002 - 0,3 %, |
| Ni: | 0,01 - 0,5 %, |
| Ca: | 0,0005 - 0,005 %, |
| W: | 0,001 -1,00 % |

besteht;

b) Erwärmen des Blechzuschnitts derart, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100°C, insbesondere oberhalb von Ms+300°C, aufweist, wobei Ms die der Martensitstarttemperatur bezeichnet.

c) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20 s, bevorzugt höchstens 15 s, beträgt;

d) Warmpressformen des Blechzuschnitts zu dem Blechformteil, wobei der Zuschnitt im Zuge des Warmpressformens über eine Dauer $t_{WZ}$ von mehr als 1 s mit einer zumindest teilweise mehr als 30 K/s betragenden Abkühlgeschwindigkeit $r_{WZ}$ auf die Zieltemperatur $T_{Ziel}$ abgekühlt und optional dort gehalten wird;

e) Entnehmen des auf Zieltemperatur abgekühlten Blechformteils aus dem Werkzeug;

Beim erfindungsgemäßen Verfahren wird somit ein Zuschnitt, der aus einem entsprechend den voranstehenden Erläuterungen in geeigneter Weise zusammengesetzten Stahl besteht, bereitgestellt (Arbeitsschritt a)), der dann in an sich bekannter Weise so erwärmt wird, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100°C, insbesondere oberhalb von Ms+300°C, beträgt. Insbesondere überschreitet die Temperatur $T_{Einlg}$ des Zuschnitts beim Einlegen zumindest teilweise 600 °C. Bei einer besonders bevorzugten Variante liegt die Temperatur $T_{Einlg}$ des Zuschnitts beim Einlegen zumindest teilweise, insbesondere vollständig im Bereich 600 °C bis 850 °C, um eine gute Umformbarkeit und die ausreichende Härtbarkeit zu gewährleisten. Unter teilweisem Überschreiten einer Temperatur (hier AC3 bzw. Ms+100°C) wird im Sinne dieser Anmeldung verstanden, dass mindestens 30 %, insbesondere mindestens 60 % des Volumens des Zuschnitts, bevorzugt der gesamte Zuschnitt, eine entsprechende Temperatur überschreitet. Entsprechendes gilt für das zumindest teilweise Vorhandensein einer Temperatur im Intervall 600 °C bis 850 °C bei der zuvor erläuterten bevorzugten Variante. Beim Einlegen in das Umformwerkzeug weist also mindestens 30 % des Zuschnitts ein austenitisches Gefüge auf, d.h. die Umwandlung vom ferritischen ins austenitische Gefüge muss beim Einlegen in das Umformwerkzeug noch nicht abgeschlossen sein. Vielmehr können bis zu 70 % des Volumens des Zuschnitts beim Einlegen in das Umformwerkzeug aus anderen Gefügebestandteilen, wie angelassenem Bainit, angelassenem Martensit und/oder nicht bzw. teilweise rekristallisiertem Ferrit bestehen. Zu diesem Zweck können bestimmte Bereiche des Zuschnitts während der Erwärmung gezielt auf einem niedrigeren Temperaturniveau gehalten werden als andere. Hierzu kann die Wärmezufuhr gezielt nur auf bestimmte Abschnitte des Zuschnitts gerichtet werden oder die Teile, die weniger erwärmt werden sollen, gegen die Wärmezufuhr abgeschirmt werden. In dem Teil des Zuschnittmaterials, dessen Temperatur niedriger bleibt, entsteht im Zuge der Umformung im Werkzeug kein oder nur deutlich weniger Martensit bzw. unterer Bainit, so dass das Gefüge dort deutlich weicher ist als in den jeweils anderen Teilen, in denen ein martensitisches Gefüge (bzw. ein Gefüge mit unterem Bainit) vorliegt. Auf diese Weise kann im jeweils geformten Blechformteil gezielt ein weicherer Bereich eingestellt werden, in dem beispielsweise eine für den jeweiligen Verwendungszweck optimale Zähigkeit vorliegt, während die anderen Bereiche des Blechformteils eine maximierte Festigkeit besitzen.

Maximale Festigkeitseigenschaften des erhaltenen Blechformteils können dadurch ermöglicht werden, dass die zumindest teilweise im Blechzuschnitt erreichte Temperatur zwischen Ac3 und 1000 °C, bevorzugt zwischen 850 °C und 950 °C liegt.

Dabei ist die zu überschreitende Mindesttemperatur Ac3 gemäß der von HOUGARDY, HP. in Werkstoffkunde Stahl Band 1: Grundlagen, Verlag Stahleisen GmbH, Düsseldorf, 1984, p. 229., angegebenen Formel

$$AC3[°C] = (902\ \text{Gew.-\%} - 225*\%C + 19*\%Si - 11*\%Mn - 5*\%Cr + 13*\%Mo - 20*\%Ni + 55*\%V)[°C/\text{Gew.-\%}]$$

mit %C = jeweiliger C-Gehalt, %Si = jeweiliger Si-Gehalt, %Mn = jeweiliger Mn-Gehalt, %Cr = jeweiliger Cr-Gehalt, %Mo = jeweiliger Mo-Gehalt, %Ni =jeweiliger Ni-Gehalt und %V = jeweiliger V-Gehalt des Stahls, aus dem der Zuschnitt besteht, bestimmt.

Eine optimal gleichmäßige Eigenschaftsverteilung lässt sich dadurch erreichen, dass der Zuschnitt im Arbeitsschritt b) vollständig durcherwärmt wird.

Bei einer bevorzugten Ausführungsvariante beträgt die mittlere Aufheizgeschwindigkeit $r_{Ofen}$ des Blechzuschnittes beim Erwärmen in Schritt b) mindestens 3 K/s, bevorzugt mindestens 5 K/s, insbesondere mindestens 6 K/s, bevorzugt mindestens 8 K/s, insbesondere mindestens 10 K/s, bevorzugt mindestens 15 K/s. Die mittlere Aufheizgeschwindigkeit $r_{Ofen}$ ist dabei als mittlere Aufheizgeschwindigkeit von 30 °C auf 700 °C zu verstehen.

Bei einer bevorzugten Ausführungsvariante beträgt die normierte mittlere Aufheizung $\Theta_{norm}$ mindestens 5 Kmm/s, insbesondere mindestens 8 Kmm/s, bevorzugt mindestens 10 Kmm/s. Maximal beträgt die normierte mittlere Aufheizung 15 Kmm/s, insbesondere maximal 14 Kmm/s, bevorzugt maximal 13 Kmm/s.

Unter der mittleren Aufheizung $\Theta$ ist dabei das Produkt aus mittlerer Aufheizgeschwindigkeit in Kelvin pro Sekunde von 30 °C auf 700 °C und Blechdicke in Millimetern zu verstehen.

Bei der normierten mittleren Aufheizung wird dieses Produkt $\Theta$ um die vorliegende Ofentemperatur $T_{ofen}$ im Verhältnis zu einer Referenz-Ofentemperatur $T_{ofen, Referenz}$ von 900°C=1173,15 K in der folgenden Weise normiert:

$$\Theta_{norm} = \frac{T_{Ofen,\ Referenz}^{4}}{T_{Ofen}^{4}} \cdot \Theta$$

dabei sind die Ofentemperaturen jeweils in Kelvin einzusetzen.

Bei einer bevorzugten Ausführungsvariante erfolgt die Erwärmung in einem Ofen mit einer Ofentemperatur $T_{Ofen}$ von mindestens Ac3+10°C, bevorzugt mindestens 850 °C, bevorzugt mindestens 880 °C, besonders bevorzugt mindestens 900 °C, insbesondere mindestens 920 °C, und maximal 1000 °C, bevorzugt maximal 950 °C, besonders bevorzugt maximal 930 °C.

Bevorzugt beträgt der Taupunkt der Ofenatmosphäre im Ofen hierbei mindestens -20 °C, bevorzugt mindestens -15 °C, insbesondere mindestens -5 °C, besonders bevorzugt mindestens 0 °C und maximal +25 °C, bevorzugt maximal + 20 °C insbesondere maximal +15 °C.

Bei einer speziellen Ausführungsvariante erfolgt die Erwärmung in Schritt b) stufenweise in Bereichen mit unterschiedlicher Temperatur. Insbesondere erfolgt die Erwärmung in einem Rollenherdofen mit unterschiedlichen Heizzonen. Hierbei erfolgt die Erwärmung in einer ersten Heizzone mit einer Temperatur (sogenannte Ofeneinlauftemperatur) von mindestens 650 °C, bevorzugt mindestens 680 °C, insbesondere mindestens 720 °C. Maximal beträgt die Temperatur in der ersten Heizzone bevorzugt 900 °C, insbesondere maximal 850 °C. Weiterhin bevorzugt beträgt die maximale Temperatur aller Heizzonen im Ofen maximal 1200 °C, insbesondere maximal 1000 °C, bevorzugt maximal 950 °C, besonders bevorzugt maximal 930 °C.

Die Gesamtzeit im Ofen $t_{Ofen}$, die sich aus einer Erwärmungszeit und einer Haltezeit zusammensetzt, beträgt bei beiden Varianten (konstante Ofentemperatur, stufenweise Erwärmung) bevorzugt mindestens 2 Minuten, insbesondere mindestens 3 Minuten, bevorzugt mindestens 4 Minuten. Weiterhin beträgt die Gesamtzeit im Ofen bei beiden Varianten bevorzugt maximal 20 Minuten, insbesondere maximal 15 Minuten, bevorzugt maximal 12 Minuten, insbesondere maximal 8 Minuten. Längere Gesamtzeiten im Ofen haben den Vorteil, dass eine gleichmäßige Austenitisierung des Blechzuschnittes sichergestellt ist. Andererseits führt ein zu langes Halten oberhalb von Ac3 zu einer Kornvergröberung, die sich negativ auf die mechanischen Eigenschaften auswirkt.

Der so erwärmte Zuschnitt wird aus der jeweiligen Erwärmungseinrichtung, bei der es sich beispielsweise um einen konventionellen Erwärmungsofen, eine ebenso an sich bekannte Induktionserwärmungseinrichtung oder eine konventionelle Einrichtung zum Warmhalten von Stahlbauteilen handeln kann, entnommen und so schnell in das Umformwerkzeug transportiert, dass seine Temperatur beim Eintreffen in dem Werkzeug zumindest teilweise oberhalb von Ms+100°C, insbesondere oberhalb von Ms+300°C, liegt, bevorzugt oberhalb von 600 °C, insbesondere oberhalb von 650 °C, besonders bevorzugt oberhalb von 700 °C. Hierbei bezeichnet Ms die Martensitstarttemperatur. Bei einer besonders bevorzugten Variante liegt die Temperatur zumindest teilweise oberhalb der AC1-Temperatur. Bei allen diesen Varianten beträgt die Temperatur insbesondere maximal 900 °C. Durch diese Temperaturbereiche wird insgesamt eine gute Umformbarkeit des Materials gewährleistet.

Im Arbeitsschritt c) wird der Transfer des austenitisierten Zuschnitts von der jeweils zum Einsatz kommenden Erwärmungseinrichtung zum Umformwerkzeug innerhalb von vorzugsweise höchstens 20 s, insbesondere von maximal 15 s absolviert. Ein derart schneller Transport ist erforderlich, um eine zu starke Abkühlung vor der Umformung zu vermeiden.

Das Werkzeug besitzt beim Einlegen des Zuschnitts typischerweise eine Temperatur zwischen Raumtemperatur (RT) und 200 °C, bevorzugt zwischen 20 °C und 180 °C, insbesondere zwischen 50 °C und 150 °C. Das Werkzeug kann beim Einlegen des Zuschnitts auch eine Temperatur geringfügig unterhalb der Raumtemperatur haben, wenn beispielsweise das verwendet Kühlwasser geringfügig kälter ist (z.B. 15°C). Damit besitzt das Werkzeug bei einzelnen Ausführungsvarianten beim Einlegen des Zuschnitts eine Temperatur zwischen 10°C und 200°C. Optional kann das Werkzeug in einer besonderen Ausführungsform zumindest bereichsweise auf eine Temperatur $T_{WZ}$ von mindestens 200 °C, insbesondere mindestens 300 °C temperiert sein, um das Bauteil nur partiell zu härten. Weiterhin beträgt die Werkzeugtemperatur $T_{wz}$ bevorzugt maximal 600 °C, insbesondere maximal 550 °C. Es ist lediglich sicherzustellen, dass die Werkzeugtemperatur $T_{WZ}$ unterhalb der gewünschten Zieltemperatur $T_{Ziel}$ liegt. Die Verweilzeit im Werkzeug $t_{WZ}$ beträgt bevorzugt mindestens 2s, insbesondere mindestens 3s, besonders bevorzugt mindestens 5s. Maximal beträgt die Verweilzeit im Werkzeug bevorzugt 25s, insbesondere maximal 20s, bevorzugt maximal 10s.

Die Zieltemperatur $T_{Ziel}$ des Blechformteils liegt zumindest teilweise unterhalb 400 °C, bevorzugt unterhalb 300 °C, insbesondere unterhalb von 250 °C, bevorzugt unterhalb von 200 °C, besonders bevorzugt unterhalb von 180 °C, insbesondere unterhalb von 150°C. Alternativ liegt die Zieltemperatur $T_{Ziel}$ des Blechformteils besonders bevorzugt unter Ms-50°C, wobei Ms die Martensitstarttemperatur bezeichnet. Weiterhin beträgt die Zieltemperatur des Blechformteils bevorzugt mindestens 20 °C, besonders bevorzugt mindestens 50 °C.

Die Martensitstarttemperatur eines im Rahmen der erfindungsgemäßen Vorgaben liegenden Stahls ist gemäß der Formel:

$$Ms\ [°C] = (490{,}85\ \text{Gew.-\%} - 302{,}6\ \%C - 30{,}6\ \%Mn - 16{,}6\ \%Ni - 8{,}9\ \%Cr + 2{,}4\ \%Mo - 11{,}3\ \%Cu + 8{,}58\ \%Co + 7{,}4\ \%W - 14{,}5\ \%Si)\ [°C/\text{Gew.-\%}]$$

zu berechnen, wobei hier mit %C der C-Gehalt, mit %Mn der Mn-Gehalt, mit %Mo der Mo-Gehalt, mit %Cr der Cr-Gehalt, mit %Ni der Ni-Gehalt, mit %Cu der Cu-Gehalt, mit %Co der Co-Gehalt, mit %W der W-Gehalt und mit %Si der Si-Gehalt des jeweiligen Stahls in Gew.-% bezeichnet wird.

Die AC1-Temperatur und die AC3-Temperatur eines im Rahmen der erfindungsgemäßen Vorgaben liegenden Stahls ist gemäß den Formeln:

$$AC1[°C] = (739 \text{ Gew.-\%} — 22*\%C - 7*\%Mn + 2*\%Si + 14*\%Cr + 13*\%Mo - 13*\%Ni +20*\%V)[°C/\text{Gew.-\%}]$$

$$AC3[°C] = (902 \text{ Gew.-\%} - 225*\%C + 19*\%Si - 11*\%Mn - 5*\%Cr + 13*\%Mo - 20*\%Ni +55*\%V)[°C/\text{Gew.-\%}]$$

zu berechnen, wobei auch hiermit mit %C der C-Gehalt, mit %Si der Si-Gehalt mit %Mn der Mn-Gehalt mit %Cr der Cr-Gehalt, mit %Mo der Mo-Gehalt, mit %Ni der Ni-Gehalt und mit +%V der Vanadium-Gehalt des jeweiligen Stahls bezeichnet sind (Brandis H 1975 TEW-Techn. Ber. 1 8-10).

Im Werkzeug wird der Zuschnitt somit nicht nur zu dem Blechformteil geformt, sondern gleichzeitig auch die Zieltemperatur abgeschreckt. Die Abkühlrate im Werkzeuge $r_{WZ}$ auf die Zieltemperatur beträgt insbesondere mindestens 20 K/s, bevorzugt mindestens 30 K/s, insbesondere mindestens 50 K/s, in besonderer Ausführung mindestens 100 K/s.

Nach dem Entnehmen des Blechformteils in Schritt e) erfolgt ein Abkühlen des Blechformteils auf eine Abkühltemperatur $T_{AB}$ von weniger als 100 °C innerhalb einer Abkühldauer $t_{AB}$ von 0,5 bis 600 s. Dies geschieht im Regelfall durch eine Luftabkühlung.

Bei einer bevorzugten Ausführungsvariante ist das Stahlflachprodukt und das Verfahren zur Herstellung eines Blechformteils derart weitergebildet, dass das Stahlflachprodukt Bereiche unterschiedlicher Dicke aufweist. Ebenso ist das Blechformteil derart weitergebildet, dass es Bereiche unterschiedlicher Dicke aufweist.

Bereiche unterschiedlicher Dicke des Stahlflachproduktes (sogenannte "tailored blanks") können auf verschiedene Arten erzeugt werden:

- Durch spezielle Kaltwalzstiche, bei denen einzelne Bereiche stärker oder häufiger gewalzt werden (beispielsweise bis zu Walzgraden von 50%), ergibt sich in diesen Bereichen eine geringere Materialstärke und damit eine geringere Dicke (sogenannte "tailor rolled blanks")
- Durch Aneinanderschweißen (typischerweise mittels Laserschweißen) werden Blechzuschnitte unterschiedlicher Dicke miteinander verbunden, um einen zusammenhängenden Blechzuschnitt mit Bereichen unterschiedlicher Dicke zu erreichen (sogenannte "tailor welded blanks")
- Mittels Widerstandspunktschweißen oder Laserschweißen werden Flicken (sogenannte "Patches") auf einen bestehenden Blechzuschnitt aufgebracht, um diesen bereichsweise aufzudicken. Alternativ können die Flicken auch mittels Strukturklebstoffen aufgebracht werden.

Mit dem beschriebenen Verfahren zur Herstellung eines Blechformteils resultiert aus dem Stahlflachprodukt mit Bereichen unterschiedlicher Dicke ein Blechformteil mit Bereichen unterschiedlicher Dicke.

Bereiche unterschiedlicher Dicke haben den Vorteil, dass gezielt einzelne Gebiete des finalen Blechformteils gezielt verstärkt werden können. Auf diese Weise ist es möglich diejenigen Partien, die besondere Belastungen erfahren (beispielsweise während eines Crashes), entsprechend stabil auszugestalten, während andere Partien dünner ausgestaltet werden, um das Gewicht des Bauteils zu reduzieren. Es resultiert also ein gewichtsoptimiertes Bauteil, das gezielte Verstärkungen in den Bereichen hoher Belastungen aufweist.

Bei einer bevorzugten Ausführungsvariante ist das Stahlflachprodukt und das Verfahren zur Herstellung eines Blechformteils derart weitergebildet, dass das Stahlflachprodukt Bereiche aus unterschiedlichem Material aufweist. Ebenso ist das Blechformteil derart weitergebildet, dass es Bereiche aus unterschiedlichem Material aufweist.

Mithilfe des Aneinanderschweißens (typischerweise mittels Laserschweißen) können auch Blechzuschnitte aus unterschiedlichem Material miteinander verbunden werden, um ein zusammenhängendes Blechformteil mit Bereichen unterschiedlicher Festigkeit zu erreichen. Auch dies wird häufig unter dem Oberbegriff "tailor welded blanks" zusammengefasst. So wird erreicht, dass es Partien des Blechformteils mit guter Umformbarkeit und geringerer Festigkeit gibt und gleichzeitig andere Partien mit einer hohen Festigkeit.

Die zuvor genannten Optionen zur lokal individuellen Einstellung von Eigenschaften des Blechformteils können selbstverständlich auch kombiniert werden.

Bei einer bevorzugten Ausführungsvariante kann das erzeugtes Blechformteil z.B. im Ganzen oder als Teil eines als Blechformteils im Automobilbau verwendet werden, z.B. als B-Säule, A-Säule, Schweller, Dachrahmen, Stoßstangenträger, Türverstärkung, Unterfahrschutz des Batteriekastens etc..

Im Folgenden wird die Erfindung anhand von Ausführungsbeispielen näher erläutert.

Figur 1 zeigt die Probengeometrie bei der Messung der Beständigkeit gegen Wasserstoffversprödung mittels des modifizierten Slow-Strain-Rate-Tests

Zum Nachweis der Wirkung der Erfindung wurden mehrere Versuche durchgeführt. Dafür wurden Brammen mit den in Tabelle 1 angegebenen Zusammensetzungen mit einer Dicke von 200 - 280 mm und Breite von 1000 - 1200 mm erzeugt, in einem Stoßofen auf eine jeweilige Temperatur T1 aufgeheizt und zwischen 30 und 450 min auf T1 gehalten, bis die Temperatur T1 im Kern der Brammen erreicht war und die Brammen somit durcherwärmt waren. Die Herstellungsparameter sind in Tabelle 2 angegeben. Die Brammen wurden mit ihrer jeweiligen Durcherwärmungstemperatur T1 aus dem Stoßofen ausgetragen und einem Warmwalzen unterzogen. Die Versuche wurden als kontinuierliche Warmbandwalzung ausgeführt. Dazu wurden die Brammen zunächst zu einem Zwischenprodukt der Dicke 40 mm vorgewalzt, wobei die Zwischenprodukte, welche bei der Warmbandwalzung auch als Vorbänder bezeichnet werden können, am Ende der Vorwalzphase jeweils eine Zwischenprodukttemperatur T2 aufwiesen. Die Vorbänder wurden unmittelbar nach der Vorwalzung dem Fertigwalzen zugeführt, so dass die Zwischenprodukttemperatur T2 der Walzanfangstemperatur für die Fertigwalzphase entspricht. Die Vorbänder wurden zu Warmbänder mit einer Enddicke von 3-7 mm und den in Tabelle 2 angegebenen jeweiligen Endwalztemperaturen T3 ausgewalzt, auf die jeweilige Haspeltemperatur abgekühlt und bei den jeweiligen Haspeltemperaturen T4 zu Coils aufgewickelt und dann in ruhender Luft abgekühlt. Die Warmbänder wurden in konventioneller Weise mittels Beizen entzundert, bevor sie einem Kaltwalzen mit den in Tabelle 2 angegebenen Kaltwalzgraden unterzogen wurden. Die kaltgewalzten Stahlflachprodukte wurden in einem Durchlaufglühofen auf eine jeweilige Glühtemperatur T5 erwärmt und für jeweils 100 s auf Glühtemperatur gehalten, bevor sie mit einer Abkühlrate von 1 K/s auf ihre jeweilige Eintauchtemperatur T6 abgekühlt wurden. Die Kaltbänder wurden mit ihrer jeweiligen Eintauchtemperatur T6 durch ein schmelzflüssiges Beschichtungsbad der Temperatur T7 geführt. Die Zusammensetzung des Beschichtungsbads ist in Tabelle 3 angegebenen. Nach dem Beschichten wurden die beschichteten Bänder auf konventionelle Weise abgeblasen, wodurch eine spezielle Schichtdicke erzeugt wurden (siehe Tabelle 3). Die Bänder wurden zunächst mit einer mittleren Abkühlrate von 10 - 15 K/s auf 600 °C abgekühlt. Im weiteren Abkühlverlauf zwischen 600 °C und 450 °C und zwischen 400 °C und 300 °C wurden die Bänder über die in Tabelle 2 angegebenen Abkühldauern $T_{mT}$ und $T_{nT}$ abgekühlt. Zwischen 450 °C und 400 °C und unterhalb von 220 °C wurden die Bänder mit einer Abkühlrate von jeweils 5 - 15 K/s abgekühlt.

In der Tabelle 4 ist zusammengestellt, welche Stahlvariante (siehe Tabelle 1) mit welcher Prozessvariante (siehe Tabelle 2) und welcher Beschichtung (siehe Tabelle 3) kombiniert wurde.

Bei den Stahlzusammensetzungen 1 handelt es sich um ein Referenzbeispiel, das nicht erfindungsgemäß ist. Entsprechend sind die Versuche 1 und 5 nicht erfindungsgemäß.

Die Dicke der erzeugten Stahlbänder lag bei allen Versuchen bei 1,5mm.

Nach dem Abkühlen auf Raumtemperatur wurden aus den abgekühlten Stahlbändern gemäß DIN EN ISO 6892-1 Probenform 2 (Anhang B Tab. B1) Proben quer zur Walzrichtung entnommen. Die Proben wurden gemäß DIN EN ISO 6892-1 Probenform 2 (Anhang B Tab. B1) einer Zugprüfung unterzogen. In Tabelle 4 sind die Ergebnisse der Zugprüfung angegeben. Im Rahmen der Zugprüfung wurden folgende Materialkennwerte ermittelt: die Streckgrenzenart, welche mit Re für eine ausgeprägte Streckgrenze und mit Rp für eine kontinuierliche Streckgrenze bezeichnet ist, sowie bei einer kontinuierlichen Streckgrenze der Wert für die Dehngrenze Rp0,2, bei einer ausgeprägten Streckgrenze die Werte für die untere Streckgrenze ReL, die obere Streckgrenze ReH und die Differenz von oberer und unterer Streckgrenze ∆Re und die Zugfestigkeit Rm. Alle Proben weisen eine kontinuierliche Streckgrenze Rp oder eine nur geringfügig ausgeprägte Streckgrenze mit einem Unterschied ∆Re zwischen oberer und unterer Streckgrenze von höchstens 50 MPa auf. Dabei liegt für die Proben 6 eine kontinuierliche Streckgrenze vor und für alle anderen Proben eine ausgeprägte Streckgrenze. Für die Probe 6 ist daher die Dehngrenze Rp0.2 angegeben. Für alle anderen Proben sind untere und obere Streckgrenze angegeben.

Von den so erzeugten 8 Stahlbändern sind jeweils Zuschnitte abgeteilt worden, die für die weiteren Versuche verwendet worden sind. Bei diesen Versuchen sind aus den jeweiligen Zuschnitten Blechformteil-Proben 1 - 8 in Form von 194 x 400 mm² großen Platten zu profilförmigen Bauteilen warmpressgeformt worden. Dazu sind die Zuschnitte in einer Erwärmungseinrichtung, beispielsweise in einem konventionellen Erwärmungsofen, von Raumtemperatur mit einer mittleren Aufheizgeschwindigkeit $r_{Ofen}$ (zwischen 30 °C und 700 °C) in einem Ofen mit einer Ofentemperatur $T_{ofen}$ erwärmt worden. Die Gesamtdauer im Ofen, die eine Erwärmen und ein Halten umfasst, ist mit $t_{Ofen}$ bezeichnet. Der Taupunkt der Ofenatmosphäre betrug in allen Fällen -5°C. Anschließend sind die Zuschnitte aus der Erwärmungseinrichtung entnommen und in ein Umformwerkzeug, welches die Temperatur $T_{WZ}$ besitzt, eingelegt worden. Beim Zeitpunkt des Entnehmens aus dem Ofen hatten die Zuschnitte die Ofentemperatur angenommen. Die sich aus der für das Entnehmen aus der Erwärmungseinrichtung, den Transport zum Werkzeug und das Einlegen ins Werkzeug zusammensetzende Transferdauer $t_{Trans}$ lag zwischen 5 und 14 s. Die Temperatur $T_{Einlg}$ der Zuschnitte beim Einlegen in das Umformwerkzeug lag in allen Fällen oberhalb der jeweiligen Martensitstarttemperatur+100°C. Im Umformwerkzeug sind die Zuschnitte zum jeweiligen Blechformteil umgeformt worden, wobei die Blechformteile im Werkzeug mit einer Abkühlgeschwindigkeit $r_{WZ}$ abgekühlt wurden. Die Verweildauer im Werkzeug wird mit $t_{WZ}$ bezeichnet. Abschließend sind die Proben an Luft auf Raumtemperatur abgekühlt worden. In Tabelle 5 sind diese Parameter zusammengestellt, wobei "RT" die Raumtemperatur abkürzt.

Die hier verwendeten Parameter für den Umformprozess führen zu einer nahezu vollständigen Bildung von martensitischen Gefüge.

In Tabelle 6 sind die Gesamtergebnisse für die erhaltenen Blechformteile zusammengestellt. Die ersten Spalten geben die Probennummer, die Stahlsorte gemäß Tabelle 1, die Prozessvariante gemäß Tabelle 2, die Beschichtung gemäß Tabelle 3 und die Warmumformvariante gemäß Tabelle 5 an. In den weiteren Spalten ist die die Streckgrenze Rp, die Zugfestigkeit Rm, die Bruchdehnung A50 angegeben. Diese Werte wurden DIN EN ISO 6892-1 Probenform 2 (Anhang B Tab. B1) an Proben ermittelt, die quer zur Walzrichtung an den ebenen Flächen der profilförmigen Bauteilen entnommen wurden. Weiterhin ist der Biegewinkel gemäß der VDA-Norm 238-100 sowohl quer als auch längs zur Walzrichtung angegeben. Dabei wird der ermittelte Biegewinkel nach der in der Norm angegebenen Formel aus dem Stempelweg errechnet (der ermittelte Biegewinkel (auch als maximaler Biegewinkel bezeichnet) ist der Biegewinkel, bei welchem die Kraft im Biegeversuch ihr Maximum hat).

Alle mechanischen Kennwerte in **Tabelle 6** wurden anhand von Proben ermittelt, die aus den planen Teilen des umgeformten Hutprofils geschnitten wurden. Weiterhin wurden die mechanischen Kennwerte in **Tabelle 6** (bis auf die Bruchspannung im modifizierten Slow Strain Rate Test) ermittelt, nachdem auf das umgeformte Blechformteil eine kathodische Tauchlackierung aufgebracht wurde. Während dieses Beschichtungsprozesses wurden die Blechformteile auf 170 °C erwärmt und bei dieser Temperatur für 20 Minuten gehalten. Anschließend werden die Blechformteile an Umgebungsluft auf Raumtemperatur abgekühlt.

Die Bruchspannung im modifizierten Slow Strain Rate Test wurden ohne eine solche kathodische Tauchlackierung und ohne eine analoge Wärmebehandlung ermittelt.

Neben den mechanischen Eigenschaften wurde zudem das Gefüge und war in allen Fällen vollständig martensitisch (d.h. mehr als 99% Martensit). Zudem wurden für die Proben 5, 6 und 8 die Ausscheidungen im Gefüge in Form von Vanadium-, Niob- und/oder Titan- Karbonitriden bestimmt. Die Ausscheidungen werden mit Hilfe von elektronenoptischen und Röntgen-Aufnahmen (TEM und EDX) anhand von Kohlenstoffausziehabdrücken (in der Fachliteratur bekannt als "carbon extraction replicas") bestimmt. Hergestellt wurden die Kohlenstoffausziehabdrücke an Längsschliffen (20x30mm). Die Auflösung der Messung lag zwischen 10.000-fach und 200.000-fach. Anhand dieser Aufnahmen lassen sich die Ausscheidungen in grobe und feine Ausscheidungen unterteilen. Als feine Ausscheidungen werden alle Ausscheidungen mit einem Durchmesser kleiner als 30 nm bezeichnet. Die übrigen Ausscheidungen werden als grobe Ausscheidungen bezeichnet. Durch einfaches Auszählen wird der Anteil von feinen Ausscheidungen an der Gesamtzahl an Ausscheidungen im Messfeld ermittelt. Für die feinen Ausscheidungen wird zudem mittels computergestützter Bildanalyse der mittlere Durchmesser berechnet. Bei allen drei untersuchten Proben beträgt der Anteil von feinen Ausscheidungen mehr als 90 %. Der mittlere Durchmesser der feinen Ausscheidungen bei Probe 5 betrug 5 nm, bei Probe 6 betrug der mittlere Durchmesser 14 nm und bei Probe 8 betrug der mittlere Durchmesser 4,5 nm.

**Tabelle 1 (Stahlsorten)**

| Stahl | C | Si | Mn | Al | Cr | Nb | Ti | B | P | S | N | Sn | As | Ca | Cu | Mo | Ni | V | Ce+La |
|---|---|---|---|---|---|---|---|---|---|---|---|---|---|---|---|---|---|---|---|
| A* | 0,311 | 0,15 | 1,07 | 0,18 | 0,15 | 0,027 | 0,012 | 0,0018 | 0,005 | 0,003 | 0,0012 | ≤ 0,03 | ≤ 0,01 | ≤ 0,0005 | 0,005 | <0,001 | 0,015 | <0,001 | < 0,001 |
| B | 0,315 | 0,16 | 1,11 | 0,20 | 0,16 | <0,0005 | 0,012 | 0,0025 | 0,006 | <0,001 | 0,0018 | ≤ 0,03 | ≤ 0,01 | ≤ 0,0005 | 0,009 | 0,0021 | 0,020 | 0,150 | 0,0215 |
| C | 0,312 | 0,16 | 1,10 | 0,20 | 0,16 | 0,021 | 0,001 | 0,0023 | 0,005 | 0,002 | 0,0019 | ≤ 0,03 | ≤ 0,01 | ≤ 0,0005 | 0,007 | 0,0015 | 0,017 | 0,053 | <0,001 |
| D | 0,318 | 0,15 | 1,11 | 0,20 | 0,16 | 0,021 | 0,001 | 0,0023 | 0,005 | <0,001 | 0,0016 | ≤ 0,03 | ≤ 0,01 | ≤ 0,0005 | 0,007 | 0,0016 | 0,018 | 0,054 | 0,0237 |

Rest Eisen und unvermeidbare Verunreinigungen. Angaben jeweils in Gew.-%;

* nicht erfindungsgemäße Referenzbeispiele

**Tabelle 2 (Herstellungsbedingungen Stahlflachprodukt)**

| Prozess-variante | T1 [°C] | T2 [°C] | T3 [°C] | T4 [°C] | KWG [%] | T5 [°C] | T6 [°C] | T7 [°C] | tmT [S] | tnT [S] |
|---|---|---|---|---|---|---|---|---|---|---|
| a | 1280 | 1075 | 860 | 500 | 42 | 775 | 680 | 670 | 15 | 15 |
| b | 1280 | 1075 | 860 | 620 | 42 | 775 | 680 | 670 | 15 | 15 |
| Angaben teilweise gerundet | | | | | | | | | | |

**Tabelle 3 (Beschichtungsvariante)**

| Beschichtungvariante | Schmelzenanalyse | | | | | Schichtdicke (einseitig) [μm] |
|---|---|---|---|---|---|---|
| | Si | Fe | Mg | Sonstige | Al | |
| α | 10,5 | 2,3 | 0,3 | <1% | Rest | 20 |

**Tabelle 4 (Stahlflachprodukt)**

| Beschichtungsversuch-Nr. | Stahl | Dicke des Stahlbandes [mm] | Prozessvariante | Streck- grenzenart | Rp0,2 oder ReH [MPa] | ReL [MPa] | Rm [MPa] |
|---|---|---|---|---|---|---|---|
| 1* | A | 1,5 | a | ausgeprägt | 679 | 648 | 739 |
| 2 | B | 1,5 | a | ausgeprägt | 752 | 706 | 801 |
| 3 | C | 1,5 | a | ausgeprägt | 618 | 577 | 707 |
| 4 | D | 1,5 | a | ausgeprägt | 639 | 599 | 718 |
| 5* | A | 1,5 | b | ausgeprägt | 608 | 560 | 687 |
| 6 | B | 1,5 | b | kontinuierlich | 744 | - | 804 |
| 7 | C | 1,5 | b | ausgeprägt | 622 | 582 | 719 |
| 8 | D | 1,5 | b | ausgeprägt | 638 | 600 | 732 |
| * nicht erfindungsgemäße Referenzbeispiele | | | | | | | |

EP 4 324 950 A1

**Tabelle 5 (Parameter Warmumformung)**

| Warmumformvariante | Mittlere Aufheizgeschwindigkeit $r_{Ofen}$ [30 - 700 °C] [K/s] | $T_{Ofen}$ [°C] | $t_{Ofen}$ [min.] | Transfer-zeit [s] | Taupunkt Ofen [°C] | $T_{Einlg}$ [°C] | $T_{WZ}$ [°C] | $t_{WZ}$ [s] | Abkühlgeschwindigkeit $r_{WZ}$ [K/s] | $T_{Ziel}$ [°C] |
|---|---|---|---|---|---|---|---|---|---|---|
| I | 8,3 | 920 | 5 | 7 | -5 | 780 | RT | 13 | 49,2 | 140 |
| Angaben teilweise gerundet | | | | | | | | | | |

**Tabelle 6 (Blechformteil)**

| Umformversuch Nr. | Stahl | Prozessvariante | Beschichtungsvariante | Warmumformvariante | Streckgrenze [MPa] | Zugfestigkeit [MPa] | A50 [%] | Biegewinkel [°] | | Bruchspannung Rm beim modifizierten Slow Strain Rate Test [MPa] |
|---|---|---|---|---|---|---|---|---|---|---|
| | | | | | | | | Biegeachse quer | Biegeachse längs | |
| 1* | A | a | α | I | 1428 | 1830 | 7,0 | 48,5 | 42,0 | 550 |
| 2 | B | a | α | I | n.b. | n.b. | n.b. | 47,3 | 45,9 | 635 |
| 3 | C | a | α | I | 1448 | 1865 | 6,8 | 48,0 | 47,0 | 519 |
| 4 | D | a | α | I | 1423 | 1832 | 6,8 | 47,7 | 48,0 | 639 |
| 5* | A | b | α | I | 1428 | 1810 | 6,4 | 51,3 | 43,5 | 612 |
| 6 | B | b | α | I | 1422 | 1810 | 6,7 | 54,4 | 48,3 | 660 |
| 7 | C | b | α | I | 1423 | 1836 | 6,5 | 48,8 | 50,8 | 551 |
| 8 | D | b | α | I | 1417 | 1814 | 6,8 | 49,2 | 50,9 | 765 |

n.b. = nicht bestimmt
\* nicht erfindungsgemäße Referenzbeispiele

**Patentansprüche**

1. Stahlflachprodukt für die Warmumformung umfassend ein Stahlsubstrat aus Stahl, der neben Eisen und unvermeidbaren Verunreinigungen (in Gew.-%) aus

|     |              |
|-----|--------------|
| C:  | 0,06 - 0,5 %, |
| Si: | 0,05 - 0,6 %, |
| Mn: | 0,4-3,0%, |
| Al: | 0,06 - 1,0 %, |
| B:  | 0,0005 - 0,01 % |
| V:  | 0,010 - 0,50 %, |
| P:  | ≤ 0,03 %, |
| S:  | ≤ 0,02 %, |
| N:  | ≤ 0,02 %, |
| Sn: | ≤ 0,03 %, |
| As: | ≤ 0,01 % |

sowie optional einem oder mehreren der Elemente "Ce, La, Nb, Cr, Cu, Mo, Ni, Ca, W" in folgenden Gehalten

|        |                |
|--------|----------------|
| Ce+La: | 0,01-0,03 % |
| Ti:    | 0,0005 - 0,10 % |
| Nb:    | 0,001 - 0,2 %, |
| Cr:    | 0,01 - 1,0%, |
| Cu:    | 0,01 - 0,2 %, |
| Mo:    | 0,002 - 0,3 %, |
| Ni:    | 0,01 - 0,5 %, |
| Ca:    | 0,0005 - 0,005 %, |
| W:     | 0,001 -1,00 % |

besteht
oder aus

|     |              |
|-----|--------------|
| C:  | 0,06 - 0,5 %, |
| Si: | 0,05 - 0,6 %, |
| Mn: | 0,4-3,0%, |
| Al: | 0,06 - 1,0 %, |
| B:  | 0,0005 - 0,01 % |
| V:  | 0,010 - 0,50 %, |
| P:  | ≤ 0,03 %, |
| S:  | ≤ 0,02 %, |
| N:  | ≤ 0,02 %, |
| Sn: | ≤ 0,03 %, |
| As: | ≤ 0,01 % |
| Ce+La: | 0,01-0,03 % |

sowie optional einem oder mehreren der Elemente "Al, Nb, Cr, Cu, Mo, Ni, Ca, W" in folgenden Gehalten

|     |              |
|-----|--------------|
| Al: | ≤1,0 %, |
| Ti: | 0,0005 - 0,10 % |
| Nb: | 0,001 - 0,2 %, |
| Cr: | 0,01 - 1,0%, |
| Cu: | 0,01 - 0,2 %, |
| Mo: | 0,002 - 0,3 %, |

(fortgesetzt)

| | |
|---|---|
| Ni: | 0,01 - 0,5 %, |
| Ca: | 0,0005 - 0,005 %, |
| W: | 0,001 - 1,00 % |

besteht.

2. Stahlflachprodukt nach Anspruch 1, **dadurch gekennzeichnet, dass** für das Verhältnis Al/(Nb+V) aus Al-Gehalt zur Summe des Nb- und V-Gehaltes gilt:

$$Al/(Nb+V) \leq 30.0$$

3. Stahlflachprodukt nach einem der Ansprüche 1-2, wobei für die Elementgehalte die folgende Bedingung gilt:

$$0,7 \text{ Gew.-\%} < Mn+Cr < 3,5 \text{ Gew.-\%}$$

4. Stahlflachprodukt nach einem der voranstehenden Ansprüche **dadurch gekennzeichnet, dass** es auf mindestens einer Seite einen Korrosionsschutzüberzug aufweist.

5. Stahlflachprodukt nach Anspruch 4, **dadurch gekennzeichnet, dass** der Korrosionsschutzüberzug ein Korrosionsschutzüberzug auf Aluminium-Basis ist und eine Legierungsschicht und eine Al-Basisschicht aufweist.

6. Stahlflachprodukt nach Anspruch 5, **dadurch gekennzeichnet, dass** die Legierungsschicht aus 35-60 Gew.-% Fe, optionalen weiteren Bestandteilen, deren Gehalte in Summe auf höchstens 5,0 Gew.-% beschränkt sind, und als Rest Aluminium besteht
und/oder
die Al-Basisschicht aus 1,0 - 15 Gew.-% Si, optional 2-4 Gew.-% Fe, optional bis zu 5,0 Gew.-% Alkali- oder Erdalkalimetalle, optional bis zu 10 % Zn und optionalen weiteren Bestandteilen, deren Gehalte in Summe auf höchstens 2,0 Gew.-% beschränkt sind, und als Rest Aluminium besteht.

7. Stahlflachprodukt nach einem der Ansprüche 1-6 **dadurch gekennzeichnet, dass** das Stahlflachprodukt eine Streckgrenze mit kontinuierlichem Verlauf (Rp0,2) oder eine Streckgrenze mit einer Differenz (ΔRe) zwischen oberem Streckgrenzenwert (ReH) und unterem Streckgrenzenwert (ReL) von höchstens 50 MPa aufweist.

8. Verfahren zum Herstellen eines Stahlflachproduktes für die Warmumformung mit einem Korrosionsschutzüberzug umfassend folgende Arbeitsschritte:

a) Zurverfügungstellen einer Bramme oder einer Dünnbramme, die aus Stahl, der neben Eisen und unvermeidbaren Verunreinigungen (in Gew.-%) aus

| | |
|---|---|
| C: | 0,06 - 0,5 %, |
| Si: | 0,05 - 0,6 %, |
| Mn: | 0,4 - 3,0 %, |
| Al: | 0,06 - 1,0 %, |
| B: | 0,0005 - 0,01 % |
| V: | 0,010 - 0,50 %, |
| P: | $\leq$ 0,03 %, |
| S: | $\leq$ 0,02 %, |
| N: | $\leq$ 0,02 %, |
| Sn: | $\leq$ 0,03 %, |
| As: | $\leq$ 0,01 % |

sowie optional einem oder mehreren der Elemente "Ce, La, Nb, Cr, Cu, Mo, Ni, Ca, W" in folgenden Gehalten

|  |  |  |
|---|---|---|
| Ce+La: | 0,01-0,03 % |  |
| Ti: | 0,0005 - 0,10 % |  |
| Nb: | 0,001 - 0,2 %, |  |
| Cr: | 0,01 - 1,0 %, |  |
| Cu: | 0,01 - 0,2 %, |  |
| Mo: | 0,002 - 0,3 %, |  |
| Ni: | 0,01 - 0,5 %, |  |
| Ca: | 0,0005 - 0,005 %, |  |
| W: | 0,001 -1,00 % |  |

besteht;
oder aus

|  |  |
|---|---|
| C: | 0,06 - 0,5 %, |
| Si: | 0,05 - 0,6 %, |
| Mn: | 0,4 - 3,0 %, |
| B: | 0,0005 - 0,01 % |
| V: | 0,010 - 0,50 %, |
| P: | ≤ 0,03 %, |
| S: | ≤ 0,02 %, |
| N: | ≤ 0,02 %, |
| Sn: | ≤ 0,03 %, |
| As: | ≤ 0,01 % |
| Ce+La: | 0,01-0,03 % |

sowie optional einem oder mehreren der Elemente "Al, Nb, Cr, Cu, Mo, Ni, Ca, W" in folgenden Gehalten

|  |  |
|---|---|
| Al: | ≤1,0 %, |
| Ti: | 0,0005 - 0,10 % |
| Nb: | 0,001 - 0,2 %, |
| Cr: | 0,01 - 1,0 %, |
| Cu: | 0,01 - 0,2 %, |
| Mo: | 0,002 - 0,3 %, |
| Ni: | 0,01 - 0,5 %, |
| Ca: | 0,0005 - 0,005 %, |
| W: | 0,001 -1,00 % |

besteht;

b) Durcherwärmen der Bramme oder Dünnbramme bei einer Temperatur (T1) von 1100 - 1400 °C;

c) optionales Vorwalzen der durcherwärmten Bramme oder Dünnbramme zu einem Zwischenprodukt mit einer Zwischenprodukttemperatur (T2) von 1000 - 1200 °C;

d) Warmwalzen zu einem warmgewalzten Stahlflachprodukt, wobei die Endwalz-temperatur (T3) 750 - 1000 °C beträgt;

e) optionales Haspeln des warmgewalzten Stahlflachprodukts, wobei die Haspel-temperatur (T4) höchstens 700 °C beträgt;

f) Entzundern des warmgewalzten Stahlflachprodukts;

g) optionales Kaltwalzen des Stahlflachprodukts, wobei der Kaltwalzgrad mindestens 30 % beträgt;

h) Glühen des Stahlflachprodukts bei einer Glühtemperatur (T5) von 650 - 900 °C;

i) Abkühlen des Stahlflachprodukts auf eine Eintauchtemperatur (T6), welche 650 - 800 °C, bevorzugt 670 - 800 °C beträgt;

j) Beschichten des auf die Eintauchtemperatur abgekühlten Stahlflachprodukts mit einem Korrosionsschutzüberzug durch Schmelztauchbeschichten in einem Schmelzenbad mit einer Schmelzentemperatur (T7) 660 - 800 °C, bevorzugt 670 - 740 °C;

k) Abkühlen des beschichteten Stahlflachprodukts auf Raumtemperatur, wobei die erste Abkühldauer $t_{mT}$ im Temperaturbereich zwischen 600 °C und 450 °C mehr als 5s, bevorzugt mehr als 10s, insbesondere mehr als 14s beträgt und die zweite Abkühldauer $t_{nT}$ im Temperaturbereich zwischen 400 °C und 300 °C mehr als 4s, bevorzugt mehr 8s, insbesondere mehr als 12s beträgt;

l) optionales Dressieren des beschichteten Stahlflachprodukts.

**9.** Verfahren nach Anspruch 8, für das Verhältnis Al/(Nb+V) aus Al-Gehalt zur Summe des Nb- und V-Gehaltes des Stahls der Bramme oder Dünnbramme gilt:

$$Al/(Nb+V) \leq 30.0$$

**10.** Verfahren nach einem der Ansprüche 8-9 **dadurch gekennzeichnet, dass** beim Schmelztauchbeschichten ein Schmelzbad verwendet wird, das den auf das Stahlflachprodukt aufzubringenden Korrosionsschutz in flüssiger Form enthält, welche aus 0,1 bis 15 Gew.-% Si, optional 2-4 Gew.-% Fe, optional bis zu 5 Gew.-% Alkali- oder Erdalkalimetalle und optional bis zu 10 % Zn und optionalen weiteren Bestandteilen, deren Gehalte in Summe auf höchstens 2,0 Gew.-% beschränkt sind, und als Rest Aluminium besteht.

**11.** Blechformteil geformt aus einem Stahlflachprodukt umfassend ein Stahlsubstrat aus Stahl, der neben Eisen und unvermeidbaren Verunreinigungen (in Gew.-%) aus

| | |
|---|---|
| C: | 0,06 - 0,5 %, |
| Si: | 0,05 - 0,6 %, |
| Mn: | 0,4 - 3,0 %, |
| Al: | 0,06 - 1,0 %, |
| B: | 0,0005 - 0,01 % |
| V: | 0,010 - 0,50 %, |
| P: | $\leq$ 0,03 %, |
| S: | $\leq$ 0,02 %, |
| N: | $\leq$ 0,02 %, |
| Sn: | $\leq$ 0,03 %, |
| As: | $\leq$ 0,01 % |

sowie optional einem oder mehreren der Elemente "Ce, La, Nb, Cr, Cu, Mo, Ni, Ca, W" in folgenden Gehalten

| | |
|---|---|
| Ce+La: | 0,01-0,03 % |
| Ti: | 0,0005 - 0,10 % |
| Nb: | 0,001 - 0,2 %, |
| Cr: | 0,01 - 1,0 %, |
| Cu: | 0,01 - 0,2 %, |
| Mo: | 0,002 - 0,3 %, |
| Ni: | 0,01 - 0,5 %, |
| Ca: | 0,0005 - 0,005 %, |
| W: | 0,001 -1,00 % |

besteht,
oder aus

| | |
|---|---|
| C: | 0,06 - 0,5 %, |
| Si: | 0,05 - 0,6 %, |
| Mn: | 0,4 - 3,0 %, |
| B: | 0,0005 - 0,01 % |
| V: | 0,010 - 0,50 %, |

(fortgesetzt)

| | |
|---|---|
| P: | ≤ 0,03 %, |
| S: | ≤ 0,02 %, |
| N: | ≤ 0,02 %, |
| Sn: | ≤ 0,03 %, |
| As: | ≤ 0,01 % |
| Ce+La: | 0,01-0,03 % |

sowie optional einem oder mehreren der Elemente "Al, Nb, Cr, Cu, Mo, Ni, Ca, W" in folgenden Gehalten

| | |
|---|---|
| Al: | ≤1,0 %, |
| Ti: | 0,0005 - 0,10 % |
| Nb: | 0,001 - 0,2 %, |
| Cr: | 0,01 - 1,0 %, |
| Cu: | 0,01 - 0,2 %, |
| Mo: | 0,002 - 0,3 %, |
| Ni: | 0,01 - 0,5 %, |
| Ca: | 0,0005 - 0,005 %, |
| W: | 0,001 -1,00 % |

besteht.

12. Blechformteil nach Anspruch 11 umfassend einen Korrosionsschutzüberzug.

13. Blechformteil nach einem der Ansprüche 11-12, wobei für das Verhältnis Al/(Nb+V) aus Al-Gehalt zur Summe des Nb- und V-Gehaltes gilt:

$$Al/(Nb+V) \leq 30.0$$

14. Blechformteil nach einem der Ansprüche 11-13 **dadurch gekennzeichnet, dass** das Stahlsubstrat des Blechformteils ein Gefüge mit zumindest teilweise mehr als 90 % Martensit und/oder unterem Bainit, bevorzugt mehr zumindest teilweise mehr als 95 % Martensit und/oder unterem Bainit, aufweist.

15. Blechformteil nach einem der Anspruche 11-14 **dadurch gekennzeichnet, dass** das Blechformteil zumindest teilweise eine Streckgrenze von mindestens 950 MPa, insbesondere mindestens 1100 MPa, bevorzugt mindestens 1200 MPa, insbesondere mindestens 1400 MPa aufweist
und/oder

das Blechformteil zumindest teilweise eine Zugfestigkeit von mindestens 1000 MPa, insbesondere mindestens 1100 MPa, bevorzugt mindestens 1300 MPa, bevorzugt mindestens 1600 MPa, insbesondere mindestens 1800 MPa aufweist
und/oder
das Blechformteil zumindest teilweise eine Bruchdehnung A50 von mindestens 4 %, bevorzugt mindestens 5 %, besonders bevorzugt mindestens 6 % aufweist
und/oder
das Blechformteil zumindest teilweise einen Biegewinkel von mindestens 30°, insbesondere mindestens 40°, bevorzugt mindestens 45°, insbesondere mindestens 48° aufweist.

16. Blechformteil nach einem der Ansprüche 11-15, **dadurch gekennzeichnet, dass** das Blechformteil feine Ausscheidungen im Gefüge, insbesondere in Form von Vanadium-, Niob- und/oder Titan- Karbonitriden, aufweist.

17. Blechformteil nach einem der Ansprüche 11-16 **dadurch gekennzeichnet, dass** die Bruchspannung im modifizierten Slow Strain Rate Test größer ist als 610 MPa, insbesondere größer ist als 625 MPa.

**18.** Verfahren zum Herstellen eines Blechformteils umfassend folgende Arbeitsschritte:

m) Bereitstellen eines Blechzuschnitts aus einem Stahlflachprodukt nach einem der Ansprüche 1-7;

n) Erwärmen des Blechzuschnitts derart, dass zumindest teilweise die AC3 Temperatur des Zuschnitts überschritten ist und die Temperatur $T_{Einlg}$ des Zuschnitts beim Einlegen in ein für ein Warmpressformen vorgesehenes Umformwerkzeug (Arbeitsschritt c)) zumindest teilweise eine Temperatur oberhalb von Ms+100°C aufweist, wobei Ms die der Martensitstarttemperatur bezeichnet.

o) Einlegen des erwärmten Blechzuschnitts in ein Umformwerkzeug, wobei die für das Entnehmen aus der Erwärmungseinrichtung und das Einlegen des Zuschnitts benötigte Transferdauer $t_{Trans}$ höchstens 20 s, bevorzugt höchstens 15 s, beträgt;

p) Warmpressformen des Blechzuschnitts zu dem Blechformteil, wobei der Zuschnitt im Zuge des Warmpressformens über eine Dauer $t_{WZ}$ von mehr als 1 s mit einer zumindest teilweise mehr als 30 K/s betragenden Abkühlgeschwindigkeit $r_{WZ}$ auf die Zieltemperatur $T_{Ziel}$ abgekühlt und optional dort gehalten wird;

q) Entnehmen des auf die Zieltemperatur $T_{Ziel}$ abgekühlten Blechformteils aus dem Werkzeug.

**19.** Verfahren nach Anspruch 18, wobei die zumindest teilweise im Blechzuschnitt erreichte Temperatur in Schritt b) zwischen Ac3 und 1000 °C, bevorzugt zwischen 850 °C und 950 °C liegt.

**20.** Verfahren nach einem der Ansprüche 18-19, wobei die Zieltemperatur $T_{Ziel}$ des Blechformteils zumindest teilweise unterhalb 400 °C, bevorzugt unterhalb 300°C liegt.

# Fig.1

Angaben in mm

Europäisches
Patentamt

European
Patent Office

Office européen
des brevets

## EUROPÄISCHER RECHERCHENBERICHT

**Nummer der Anmeldung**

EP 22 19 0910

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2021/248635 A1 (IRONOVATION MATERIALS TECH CO LTD [CN]) 16. Dezember 2021 (2021-12-16) * Zusammenfassung; Ansprüche 1-13; Tabellen 1-3 * * Absätze [0040] – [0045], [0052], [0059] – [0068] * ----- | 1-20 | INV. C22C38/00 C22C38/02 C22C38/04 C22C38/06 C22C38/12 C22C38/24 C22C38/32 |
| X | WO 2022/047956 A1 (IRONOVATION MATERIALS TECH CO LTD [CN]) 10. März 2022 (2022-03-10) * Zusammenfassung; Ansprüche 1-16; Tabellen 1-3 * ----- | 1-20 | C21D1/18 C21D8/02 C21D9/46 C23C2/12 |
| X | CN 112 226 691 A (ANGANG STEEL CO LTD) 15. Januar 2021 (2021-01-15) * Zusammenfassung; Ansprüche 1-5; Tabellen 1-4 * ----- | 1-20 | |
| A,D | EP 3 483 299 A1 (UNIV NORTHEASTERN [CN]; BENGANG STEEL PLATES CO LTD [CN]) 15. Mai 2019 (2019-05-15) * das ganze Dokument * ----- | 1-20 | RECHERCHIERTE SACHGEBIETE (IPC) |
| A | EP 3 075 872 A1 (NIPPON STEEL & SUMITOMO METAL CORP [JP]) 5. Oktober 2016 (2016-10-05) * das ganze Dokument * ----- | 1-20 | C22C C21D C23C |

Der vorliegende Recherchenbericht wurde für alle Patentansprüche erstellt

| Recherchenort | Abschlußdatum der Recherche | Prüfer |
|---|---|---|
| Den Haag | 11. Januar 2023 | Mikloweit, Alexander |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 22 19 0910

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-01-2023

| Im Recherchenbericht angeführtes Patentdokument | Datum der Veröffentlichung | Mitglied(er) der Patentfamilie | Datum der Veröffentlichung |
|---|---|---|---|
| WO 2021248635 A1 | 16-12-2021 | BR 112022025079 A2 | 27-12-2022 |
| | | CN 111394679 A | 10-07-2020 |
| | | WO 2021248635 A1 | 16-12-2021 |
| WO 2022047956 A1 | 10-03-2022 | CN 111778467 A | 16-10-2020 |
| | | WO 2022047956 A1 | 10-03-2022 |
| CN 112226691 A | 15-01-2021 | KEINE | |
| EP 3483299 A1 | 15-05-2019 | CN 106399837 A | 15-02-2017 |
| | | EP 3483299 A1 | 15-05-2019 |
| | | JP 2019529717 A | 17-10-2019 |
| | | JP 2022023165 A | 07-02-2022 |
| | | KR 20190042563 A | 24-04-2019 |
| | | US 2019309385 A1 | 10-10-2019 |
| | | WO 2018006490 A1 | 11-01-2018 |
| EP 3075872 A1 | 05-10-2016 | CA 2931494 A1 | 04-06-2015 |
| | | CN 105793455 A | 20-07-2016 |
| | | EP 3075872 A1 | 05-10-2016 |
| | | JP 6341214 B2 | 13-06-2018 |
| | | JP 2018119214 A | 02-08-2018 |
| | | JP WO2015080242 A1 | 16-03-2017 |
| | | KR 20160090865 A | 01-08-2016 |
| | | KR 20180001590 A | 04-01-2018 |
| | | RU 2625374 C1 | 13-07-2017 |
| | | TW 201529867 A | 01-08-2015 |
| | | US 2017029914 A1 | 02-02-2017 |
| | | WO 2015080242 A1 | 04-06-2015 |

EPO FORM P0461

Für nähere Einzelheiten zu diesem Anhang : siehe Amtsblatt des Europäischen Patentamts, Nr.12/82

**EP 4 324 950 A1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2019223854 A1
- EP 3483299 A
- WO 2020239905 A1
- EP 2553133 B1

**In der Beschreibung aufgeführte Nicht-Patentliteratur**

- Grundlagen. **HOUGARDY, HP.** Werkstoffkunde Stahl. Verlag Stahleisen GmbH, 1984, vol. 1, 229